# EUROPEAN PATENT SPECIFICATION

(11) **EP 3 618 350 B1**
(45) Date of publication and mention of the grant of the patent: **31.07.2024**
(21) Application number: 17915619.5
(22) Date of filing: 27.06.2017
(51) Int. Cl.: H04L 41/0668, H04L 41/0816, H04L 41/0823

(54) **PROTECTION SWITCHING METHOD, DEVICE AND SYSTEM**
SCHUTZSCHALTVERFAHREN, -VORRICHTUNG UND -SYSTEM
PROCÉDÉ, DISPOSITIF ET SYSTÈME DE COMMUTATION DE PROTECTION

(43) Date of publication of application: 04.03.2020
(73) Proprietor: Huawei Technologies Co., Ltd., Longgang District Shenzhen, Guangdong 518129 (CN)
(72) Inventor: SUN, Liang, Shenzhen Guangdong 518129 (CN)
(74) Representative: MERH-IP Matias Erny Reichl Hoffmann Patentanwälte PartG mbB
(86) International application number: PCT/CN2017/090402
(87) International publication number: WO 2019/000241

(56) References cited:
- EP-A1- 2 352 253
- EP-A1- 2 661 048
- EP-A1- 3 013 017
- WO-A1-2012/171397
- CN-A- 101 997 751
- CN-A- 102 833 089
- CN-A- 106 803 785
- # OIF: "IA OIF-FLEXE-01.0 Flex Ethernet Implementation Agreement", 1 March 2016 (2016-03-01), pages 1 - 31, XP055459137, Retrieved from the Internet <URL:http://www.oiforum.com/wp-content/uploads/OIF-FLEXE-01.0.pdf> [retrieved on 20180314]

## Description

### TECHNICAL FIELD

Embodiments of this application relate to the field of communications technologies, and in particular, to a protection switching method and system, and a device.

### BACKGROUND

A Flexible Ethernet (Flexible Ethernet, FlexE) network is an improved network based on Ethernet.

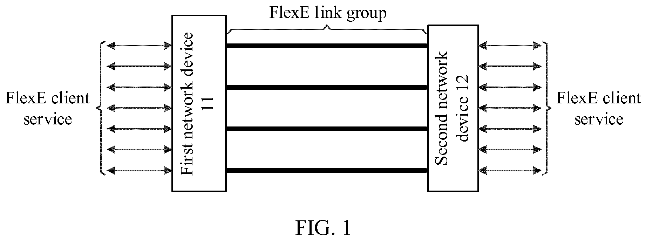

FIG. 1 shows an example of a FlexE network architecture. A plurality of links are established between a first network device 11 and a second network device 12. Forming a FlexE link group, these links are used to carry at least one client service. Because one client service may be transmitted over a plurality of links, such a network architecture has high flexibility.

Current FlexE standards define no related protection switching mechanism. If a fault occurs on a link in a FlexE link group, the entire FlexE link group stops working, causing a large-area service interruption. Document WO2012171397A1 discloses a link protection method which comprises the following steps of: configuring a service group and an intra-group link for bearing service group data, and configuring at least one extra-group link as a protection link of the intra-group link; bearing the service data with the intra-group link; and if the intra-group link bearing the service data at the local end or opposite end fails, bearing the service data of the failed intra-group link by the configured protection link.

### SUMMARY

Embodiments of this application provide a protection switching method and system, and a device, to resolve a prior-art problem that an entire FlexE link group stops working when there is an unavailable link in the FlexE link group. The invention is defined by the independent claims. Examples are not encompassed by the appended claims, while possible designs denote implementations.

According to one aspect, an embodiment of this application provides a protection switching method, where the method includes: determining, by a first network device, that there is at least one unavailable link in an active FlexE link group, and selecting m standby links from preconfigured standby links as protection links, where the active FlexE link group includes a plurality of links that are logically bonded, and m is a positive integer less than or equal to a quantity of unavailable links in the active FlexE link group; sending, by the first network device, a protection switching notification to a second network device, and replacing m unavailable links in the at least one unavailable link with the m protection links; replacing, by the second network device based on the protection switching notification, the m unavailable links with the m protection links, where the m protection links are in a one-to-one correspondence with the m unavailable links; and sending, by the second network device, a protection switching response to the first network device; and a first protection link in the m protection links belongs to the standby FlexE link group and is used to replace a first unavailable link, the first network device/the second network device deletes the first unavailable link from the active FlexE link group and adds the first protection link to the active FlexE link group; wherein any protection link in the standby FlexE link group may be used to provide protection switching for any link in any active FlexE link group; wherein an unavailable link becomes a standby link after being replaced by a protection link and after the unavailable link is restored to available; and wherein a master-slave relationship is negotiated between the first network device and the second network device and the first network device is a master end device.

In the solution provided in this embodiment of this application, a standby link is provided for a link in a FlexE link group, to implement link redundancy backup. In this way, when there is an unavailable link in the FlexE link group, a standby link is selected as a protection link and the unavailable link is replaced with the protection link, to avoid a problem that the entire FlexE link group stops working because of one faulty link, thereby satisfying an application requirement of FlexE for protection switching.

According to an example, the protection link belongs to the active FlexE link group. The replacing, by the first network device/the second network device, m unavailable links in the at least one unavailable link with the m protection links includes: if a second protection link in the m protection links belongs to the active FlexE link group and is used to replace a second unavailable link, the first network device/the second network device applies slot configuration of the second unavailable link to the second protection link.

In the foregoing manner, link replacement is implemented when the protection link belongs to the active FlexE link group.

In still another possible design, the protection switching notification is a FlexE information frame, a target field of the FlexE information frame carries protection switching information, and the protection switching information is used to instruct the second network device to replace the m unavailable links with the m protection links.

The protection switching information is sent by extending a function of the target field of the FlexE information frame.

According to another example, the method further includes: if it is determined that n links in the m unavailable links are restored to available, sending, by the first network device, a link restoration notification to the second network device, and replacing n protection links with the n links that are restored to available; replacing, by the second network device based on the link restoration notification, the n protection links with the n links that are restored to available, where n is a positive integer less than or equal to m; and sending, by the second network device, a link restoration response to the first network device.

In the foregoing manner, when it is determined that a link is restored to available from being unavailable, a protection link is replaced with the link that is restored to available, to restore a standby link resource in a timely manner.

According to another example, the determining, by a first network device, that there is at least one unavailable link in an active FlexE link group includes: the first network device detects whether a FlexE information frame sent by the second network device is correctly received on each link included in the active FlexE link group, and the first network device determines, based on a detection result, whether the link included in the active FlexE link group is available; and/or the first network device receives receiving status information sent by the second network device, where the receiving status information is used to indicate whether a FlexE information frame sent by the first network device is correctly received by the second network device on each link included in the active FlexE link group, and the first network device determines, based on the receiving status information, whether the link included in the active FlexE link group is available.

In the foregoing manner, two manners of determining whether a link is available are provided, to implement bidirectional detection on availability of the link separately.

According to another example, the method further includes: sending, by the first network device, first master-slave configuration information to the second network device, where the first master-slave configuration information is used to indicate a master-slave relationship configured in the first network device, so that the second network device determines, based on the first master-slave configuration information and a master-slave relationship configured in the second network device, whether a master-slave relationship is correctly configured between the first network device and the second network device; and sending, by the second network device, second master-slave configuration information to the first network device, where the second master-slave configuration information is used to indicate a master-slave relationship configured in the second network device, so that the first network device determines, based on the second master-slave configuration information and a master-slave relationship configured in the first network device, whether a master-slave relationship is correctly configured between the first network device and the second network device.

In the foregoing manner, a master-slave relationship between devices at two ends of FlexE can be specified. When there is an unavailable link, a master end device selects a protection link and initiates a protection switching notification, to implement process simplification.

According to another aspect, an embodiment of this application provides a network device. The network device has a function of implementing actions implemented on a side of the first network device or the second network device in the foregoing method examples. The function may be implemented by hardware, or may be implemented by hardware by executing corresponding software. The hardware or the software includes one or more units corresponding to the foregoing function.

In a possible design, a structure of the network device includes a processor and a communications interface. The processor is configured to support the network device in executing a corresponding function in the foregoing method. The communications interface is configured to support the network device in communicating with another network device. Further, the network device may include a memory, the memory is configured to be coupled with the processor, and the memory stores a program instruction and data that are necessary for the network device.

According to yet another example, an embodiment of this application provides a protection switching system. The system includes the first network device and the second network device in the foregoing aspects.

According to still another example, an embodiment of this application provides a computer storage medium, configured to store a computer software instruction used by the first network device and/or the second network device. The computer software instruction includes a program designed to implement the foregoing aspects.

According to still another example, an embodiment of this application provides a computer program product. When the computer program product is executed, the computer program product is used to perform the methods used on a side of the first network device and/or the second network device in the foregoing aspects.

Compared with that in the prior art, in the solutions provided in this embodiment of this application, a standby link is provided for a link in a FlexE link group, to implement link redundancy backup. In this way, when there is an unavailable link in the FlexE link group, a standby link is selected as a protection link and the unavailable link is replaced with the protection link, to avoid a problem that the entire FlexE link group stops working because of one faulty link, thereby satisfying an application requirement of FlexE for protection switching.

### BRIEF DESCRIPTION OF DRAWINGS

FIG. 1 is an example of a FlexE network architecture;
FIG. 2 is an example of a schematic diagram of protection switching;
FIG. 3 is a flowchart of a protection switching method according to an embodiment of this application;
FIG. 4 is an example of another schematic diagram of protection switching;
FIG. 5A is an example of a schematic diagram of protection switching when a link is unavailable in a direction from a master end to a slave end;
FIG. 5B is an example of a flowchart of protection switching when a link is unavailable in a direction from a master end to a slave end;
FIG. 6A is an example of a schematic diagram of protection switching when a link is unavailable in a direction from a slave end to a master end;
FIG. 6B is an example of a flowchart of protection switching when a link is unavailable in a direction from a slave end to a master end;
FIG. 7 is an example of a flowchart of a link restoration process;
FIG. 8 is a flowchart of a protection switching method according to another embodiment of this application;
FIG. 9 is an example of a schematic diagram of an application scenario;
FIG. 10A, FIG. 10B, and FIG. 10C are an example of a schematic diagram of another application scenario;
FIG. 11A, FIG. 11B, and FIG. 11C are an example of a schematic diagram of still another application scenario;
FIG. 12A is a schematic block diagram of a network device according to an embodiment of this application; and
FIG. 12B is a schematic structural diagram of a network device according to an embodiment of this application.

### DESCRIPTION OF EMBODIMENTS

To make the objectives, technical solutions, and advantages of this application clearer, the following further describes the implementations of this application in detail with reference to the accompanying drawings.

The network architecture and the service scenario described in the embodiments of this application are intended to describe the technical solutions in the embodiments of this application more clearly, and do not constitute a limitation on the technical solutions provided in the embodiments of this application. A person of ordinary skill in the art may know that as the network architecture evolves and a new service scenario emerges, the technical solutions provided in the embodiments of this application are also applicable to similar technical problems.

The technical solutions provided in the embodiments of this application may be applicable to a FlexE network architecture shown in FIG. 1. The network architecture includes a first network device 11 and a second network device 12.

A network device (for example, the first network device 11 or the second network device 12) may be a device having data receiving and sending functions, for example, a router, a switch, or a data storage device.

There is at least one FlexE link group between the first network device 11 and the second network device 12, and each FlexE link group includes a plurality of links that are logically bonded. The logical bonding means that a plurality of links are grouped together to form a FlexE link group, and a physical connection relationship may not exist between the plurality of links. Therefore, the plurality of links in the FlexE link group may be physically independent. A link in this embodiment of this application may be an Ethernet physical link, for example, an optical fiber. In this embodiment of this application, a bandwidth provided by each link is not limited. For example, the bandwidth provided by each link is 100 G, namely, 100 Gbit/s; and 1 G = 1024 M. A network device supporting FlexE may identify links included in a FlexE link group by link number, to logically bond a plurality of links. For example, each link may be identified by a number from 1 to 254, and 0 and 255 are reserved numbers. A number of a link may correspond to a port on the network device. A same number needs to be used to identify a same link connecting two ends, namely, the first network device 11 and the second network device 12. Numbers of links included in a FlexE link group are not necessarily consecutive. One or more FlexE link groups exist between two network devices. One link may be used to carry at least one client service, and one client service may be transmitted on at least one link. In FlexE standards, a client service may be referred to as a client.

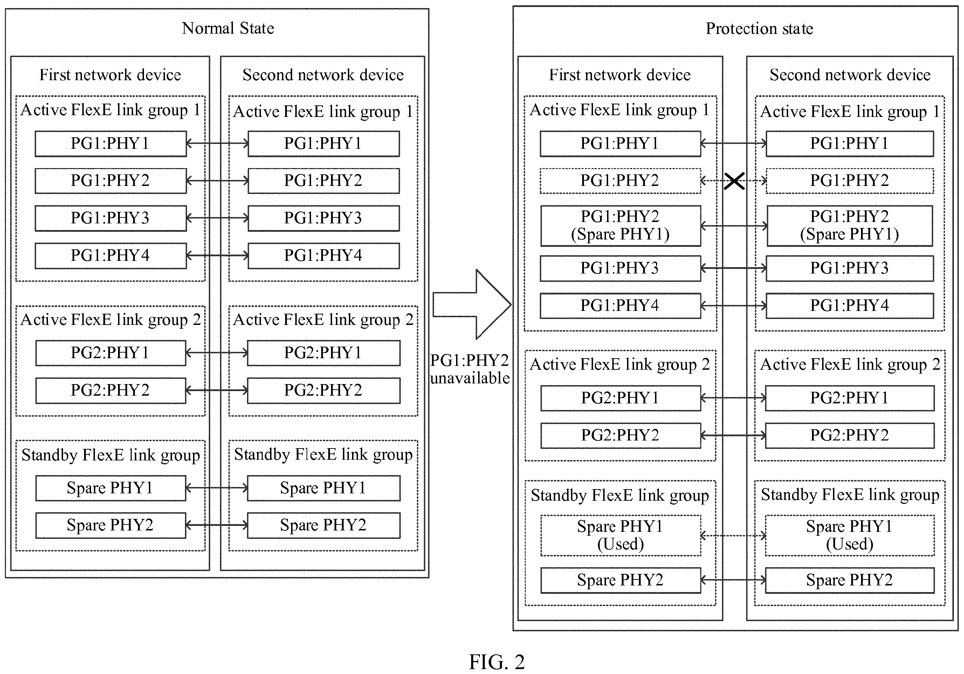

In an example, as shown in FIG. 2, it is assumed that there are two active FlexE link groups and one standby FlexE link group between a first network device and a second network device. An active FlexE link group 1 includes four links that are denoted as a PG1:PHY1, a PG1:PHY2, a PG1:PHY3, and a PG1:PHY4 respectively. An active FlexE link group 2 includes two links that are denoted as a PG2:PHY1 and a PG2:PHY2 respectively. The standby FlexE link group includes two links that are denoted as a Spare PHY1 and a Spare PHY2 respectively. In the technical solution provided in this embodiment of this application, it is assumed that when the link PG1:PHY2 in the active FlexE link group 1 is unavailable due to a fault, a standby link (for example, the Spare PHY1) is selected from the standby FlexE link group as a protection link, and the PG1:PHY2 is replaced with the Spare PHY1, to implement protection switching. If a plurality of links in the active FlexE link group are unavailable, the protection switching needs to be performed for each of the plurality of links.

The following further describes the embodiments of this application in detail based on a common aspect of the embodiments of this application described above.

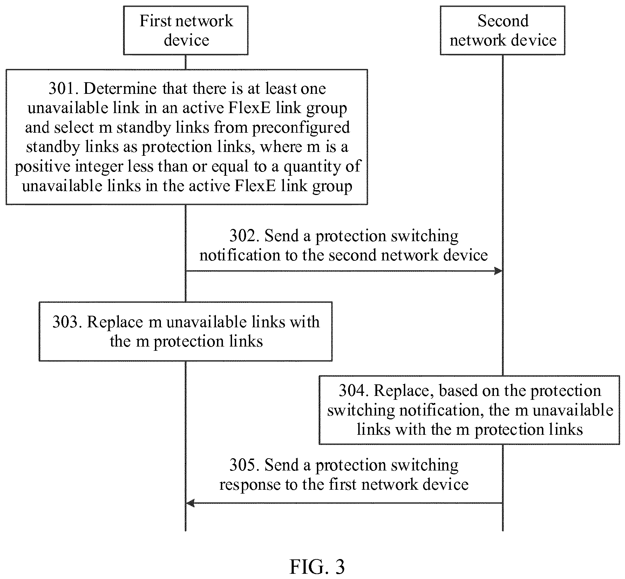

FIG. 3 is a flowchart of a protection switching method according to an embodiment of this application. The method may include the following steps:
Step 301. A first network device determines that there is at least one unavailable link in an active FlexE link group, and selects m standby links from preconfigured standby links as protection links, where m is a positive integer less than or equal to a quantity of unavailable links in the active FlexE link group.

The active FlexE link group includes a plurality of links that are logically bonded. For example, as shown in FIG. 2, the active FlexE link group 1 includes four links, and the active FlexE link group 2 includes two links.

The standby link is a redundant link used to replace an unavailable link in the active FlexE link group. A total quantity of preconfigured standby links may be determined as required. For example, a relatively large quantity of standby links are preconfigured when a relatively strong protection switching function needs to be provided.

In a first possible implementation, the preconfigured standby link does not belong to any active FlexE link group. Optionally, the preconfigured standby link belongs to a standby FlexE link group. Any standby link in the standby FlexE link group may be used to provide protection switching for any link in the any active FlexE link group. For example, as shown in FIG. 2, the standby FlexE link group includes two links that are denoted as the Spare PHY1 and the Spare PHY2 respectively. The Spare PHY1 may be used to provide protection switching for any link in the active FlexE link group 1 and the active FlexE link group 2. Similarly, the Spare PHY2 may be used to provide protection switching for any link in the active FlexE link group 1 and the active FlexE link group 2.

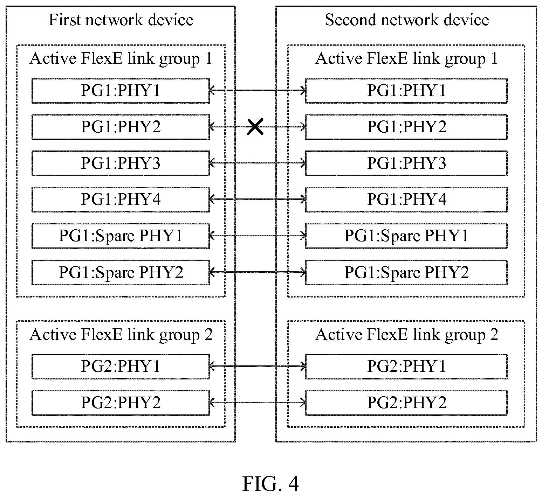

In a second possible implementation, the standby link is preconfigured in the active FlexE link group. A standby link preconfigured in a specific active FlexE link group is only used to provide protection switching for any link in the active FlexE link group to which the standby link belongs, but cannot be used to provide protection switching for a link in another active FlexE link group. For example, as shown in FIG. 4, it is assumed that there are two active FlexE link groups between a first network device and a second network device. An active FlexE link group 1 includes six links, which are four active links and two standby links. The four active links are denoted as a PG1:PHY1, a PG1:PHY2, a PG1:PHY3, and a PG1:PHY4 respectively, and the two standby links are denoted as a PG1:Spare PHY1 and a PG1:Spare PHY2 respectively. An active FlexE link group 2 includes two links that are denoted as a PG2:PHY1 and a PG2:PHY2 respectively. The two links both are active links, and the active FlexE link group 2 does not include a standby link. The PG1:Spare PHY1 may be used to provide protection switching for any active link in the active FlexE link group 1. Similarly, the PG1:Spare PHY2 may be used to provide protection switching for any active link in the active FlexE link group 1. However, neither the PG1:Spare PHY1 nor the PG1:Spare PHY2 can be used to provide protection switching for a link in the active FlexE link group 2.

When selecting the protection link from the preconfigured standby links, the first network device selects the protection link from selectable standby links. The selectable standby link is a standby link that is not used and that belongs to the standby FlexE link group and/or a same active FlexE link group to which the unavailable link belongs.

It is assumed that the first network device determines that there are n unavailable links in the active FlexE link group, and n is a positive integer. A quantity of preconfigured selectable standby links is p, and p is a positive integer. If p is greater than or equal to n, the first network device may select a maximum of n protection links, that is, a maximum value of m is n, to implement protection switching for all of the n unavailable links. If p is less than n, the first network device may select a maximum of p protection links, that is, a maximum value of m is p, to implement protection switching for some of the n unavailable links.

For the foregoing two implementations, refer to the following description for a specific process of selecting the protection link.

The unavailable link may be a link that has been assigned to a client service for use, or may be a link that has not been assigned to a client service for use. In addition, unavailability of a link may be caused by a fault on the link. Certainly, another possible reason for unavailability of a link is not limited in this embodiment of this application. For example, that the link switches from an available state to an unavailable state is configured during test or maintenance.

Step 302. The first network device sends a protection switching notification to a second network device.

The protection switching notification is used to instruct the second network device to replace m unavailable links in the at least one unavailable link with the m protection links. The m protection links are in a one-to-one correspondence with the m unavailable links. In other words, one protection link is used to replace one unavailable link. Optionally, the protection switching notification indicates a correspondence between a protection link and an unavailable link. In other words, the protection switching notification indicates that a specific protection link is used to replace a specific unavailable link.

The first network device may send the protection switching notification to the second network device on any one or more available FlexE links. The available FlexE link may be a link that is not faulty in the active FlexE link group, or may be a standby link such as a protection link. In another possible implementation, there is another communication channel different from the FlexE link between the first network device and the second network device, and the first network device may further send the protection switching notification to the second network device through the another communication channel. The another communication channel includes but is not limited to an Etherchannel, an optical transmission network channel, or the like. This is not limited in this embodiment of this application.

Optionally, when the protection switching notification is sent on a FlexE link, the protection switching notification is a FlexE information frame. A target field of the FlexE information frame carries protection switching information, and the protection switching information is used to instruct the second network device to replace the m unavailable links with the m protection links. A packet transmitted on the FlexE link by devices (for example, the first network device and the second network device in this embodiment of this application) at two ends of FlexE may be referred to as a FlexE information frame, and the FlexE information frame may be a FlexE overhead frame or a FlexE management frame. The FlexE information frame is referred to as a FlexE overhead frame or a FlexE multiframe in FlexE standards. The FlexE information frame includes fields such as FlexE Group Number, PHY Map, PHY Number, Client Calendar, Reserved, Management Channel-Section, Management Channel-Shim to Shim, and the like. For example, the FlexE Group Number field is used to indicate a number of a FlexE link group, the PHY Map field is used to indicate links included in the FlexE link group, the PHY Number field is used to indicate a number of a link in the FlexE link group, the Client Calendar field may be referred to as a slot assignment table and is used to indicate an assignment relationship between a slot and a client service, the Reserved field is a reserved field, and the Management Channel field is used to indicate management information related to the FlexE link group. The target field may be the Management Channel-Section field, or may be the Reserved field. This is not limited in this embodiment of this application.

Step 303. The first network device replaces the m unavailable links with the m protection links.

Each of the m unavailable links is replaced by the first network device by using one of the m protection links.

If a first protection link in the m protection links belongs to the standby FlexE link group and is used to replace a first unavailable link, the first network device deletes the first unavailable link from the active FlexE link group and adds the first protection link to the active FlexE link group. The first protection link is one of the m protection links and the first unavailable link is one of the m unavailable links. If the first network device deletes the first unavailable link from the active FlexE link group, an association relationship is removed between the first unavailable link and the active FlexE link group. If the first network device adds the first protection link to the active FlexE link group, an association relationship is established between the first protection link and the active FlexE link group.

In an example, with reference to FIG. 2, the first network device replaces the PG1:PHY2 with the Spare PHY1. The replacement process may include the following steps:
1. Delete the PG1:PHY2 from the active FlexE link group 1. In other words, an association relationship is removed between the PG1:PHY2 and the active FlexE link group 1.
2. Delete the Spare PHY1 from the standby FlexE link group. In other words, an association relationship is removed between the Spare PHY1 and the standby FlexE link group.
3. Add the Spare PHY1 to the active FlexE link group 1.

The first network device performs, by using configuration information of the PG1:PHY2, the following configuration: (1) Configure FlexE Group Number for the Spare PHY1. (2) Configure PHY Map for the Spare PHY1. (3) Configure PHY Number for the Spare PHY1. (4) Configure Client Calendar for the Spare PHY1. (5) Establish an association relationship between the Spare PHY1 and the active FlexE link group 1.

Optionally, the replacement process further includes the following step 4:

### 4. Add the PG1:PHY2 to the standby FlexE link group.

The first network device performs, by using configuration information of the Spare PHY1, the following configuration: (1) Configure FlexE Group Number for the PG1:PHY2. (2) Configure PHY Map for the PG1:PHY2. (3) Configure PHY Number for the PG1:PHY2. (4) Establish an association relationship between the PG1:PHY2 and the standby FlexE link group.

If a second protection link in the m protection links belongs to the active FlexE link group and is used to replace a second unavailable link, the first network device applies slot configuration of the second unavailable link to the second protection link. The second protection link is one of the m protection links and the second unavailable link is one of the m unavailable links. The slot configuration includes but is not limited to slot division, slot status configuration, or configuration of an assignment relationship between a client service and a slot. A slot status includes an unavailable (unavailable) state, a used (used) state, and an unused (unused) state. The unavailable state indicates that the slot cannot be assigned to a client service for use. The used state indicates that the slot has been assigned to a client service for use. The unused state indicates that the slot can be assigned to a client service for use, but temporarily is not allocated to a client service for use.

When a standby link that belongs to the active FlexE link group is not used, all slots of the standby link are configured to be in the unavailable state. In an example, with reference to FIG. 4, the first network device replaces the PG1:PHY2 with the PG1:Spare PHY1 and applies slot configuration of the PG1:PHY2 to the PG1:Spare PHY1. For example, when a specific slot of the PGEPHY2 is in the used state, that a corresponding slot of the PG1:Spare PHY1 switches from the unavailable state to the used state is configured. For another example, when a specific slot of the PG1 :PHY2 is assigned to a client service 1 for use, that a corresponding slot of the PG1 :Spare PHY 1 is assigned to the client service 1 for use is configured. In addition, the first network device further configures all slots on the PG1:PHY2 to be in the unavailable state.

Step 304. The second network device replaces, based on the protection switching notification, the m unavailable links with the m protection links.

After receiving the protection switching notification sent by the first network device, the second network device replaces, based on the protection switching notification, the m unavailable links with the m protection links.

If the first protection link in the m protection links belongs to the standby FlexE link group and is used to replace the first unavailable link, the second network device deletes the first unavailable link from the active FlexE link group and adds the first protection link to the active FlexE link group.

If the second protection link in the m protection links belongs to the active FlexE link group and is used to replace the second unavailable link, the second network device applies the slot configuration of the second unavailable link to the second protection link.

A specific operation process in which the second network device replaces the unavailable link with the protection link is the same as the specific operation process performed by the first network device described in step 303. Reference may be made to the description in step 303, and details are not described herein again.

Step 305. The second network device sends a protection switching response to the first network device.

The protection switching response is used to indicate that the second network device has completed link replacement based on the protection switching notification.

The second network device may send the protection switching response to the first network device on any one or more available FlexE links. The available FlexE link may be a link that is not faulty in the active FlexE link group, or may be a standby link such as a protection link. In another possible implementation, there is another communication channel different from the FlexE link between the first network device and the second network device, and the second network device may further send the protection switching response to the first network device through the another communication channel. The another communication channel includes but is not limited to an Etherchannel, an optical transmission network channel, or the like. This is not limited in this embodiment of this application.

In addition, for any unavailable link that has been assigned to a client service for use, after the first network device receives the protection switching response, the client service that is transmitted on the unavailable link is switched to a corresponding protection link for transmission. If the unavailable link is not assigned to a client service for use, the client service switching does not need to be performed.

In the solution provided in this embodiment of this application, a standby link is provided for a link in the FlexE link group, to implement redundancy backup. In this way, when there is an unavailable link in the FlexE link group, a standby link is selected as a protection link and the unavailable link is replaced with the protection link, to avoid a problem that the entire FlexE link group stops working because of one faulty link, thereby satisfying an application requirement of FlexE for protection switching.

Optionally, the specific process of selecting the protection link by the first network device may be as follows:

When determining that there are a unavailable links in a specific active FlexE link group, the first network device selects b standby links as protection links from the standby FlexE link group based on the following conditions: there is no preconfigured standby link or selectable standby link in the active FlexE link group, and there is a selectable standby link in the standby FlexE link group. Both a and b are positive integers, and b is less than or equal to a. It is assumed that a quantity of selectable standby links in the standby FlexE link group is c, where c is a positive integer. If c is greater than or equal to a, the first network device may select a maximum of a protection links, that is, provide protection switching for all of the a unavailable links. If c is less than a, the first network device may select a maximum of c protection links, that is, provide protection switching for some of the a unavailable links.

When determining that there are a unavailable links in a specific active FlexE link group, the first network device selects b standby links as protection links from the active FlexE link group based on the following conditions: there is a selectable standby link in the active FlexE link group, and there is no selectable standby link or preconfigured standby link in the standby FlexE link group. Both a and b are positive integers, and b is less than or equal to a. It is assumed that a quantity of selectable standby links in the active FlexE link group is c, where c is a positive integer. If c is greater than or equal to a, the first network device may select a maximum of a protection links, that is, provide protection switching for all of the a unavailable links. If c is less than a, the first network device may select a maximum of c protection links, that is, provide protection switching for some of the a unavailable links.

When determining that there are a unavailable links in a specific active FlexE link group, the first network device selects b standby links as protection links from the active FlexE link group and/or the standby FlexE link group based on the following conditions: there is a selectable standby link in the active FlexE link group, and there is also a selectable standby link in the standby FlexE link group. Both a and b are positive integers, and b is less than or equal to a. It is assumed that a total quantity of selectable standby links in the active FlexE link group and the standby FlexE link group is c, where c is a positive integer. If c is greater than or equal to a, the first network device may select a maximum of a protection links, that is, provide protection switching for all of the a unavailable links. If c is less than a, the first network device may select a maximum of c protection links, that is, provide protection switching for some of the a unavailable links. Optionally, the first network device preferentially selects a protection link from the active FlexE link group.

In the embodiment in FIG. 3, an example in which the first network device selects the protection link and initiates the protection switching notification is used. To avoid a case in which different protection links are selected because protection switching notifications are simultaneously initiated by the devices at the two ends of FlexE, a master-slave relationship may be negotiated by the devices at the two ends. A master end device selects the protection link and initiates the protection switching notification.

Optionally, a process of negotiating the master-slave relationship includes the following two parts:
In a first part, the first network device sends first master-slave configuration information to the second network device, where the first master-slave configuration information is used to indicate a master-slave relationship configured in the first network device. After receiving the first master-slave configuration information, the second network device determines, based on the first master-slave configuration information and a master-slave relationship configured in the second network device, whether a master-slave relationship is correctly configured between the first network device and the second network device.

In a second part, the second network device sends second master-slave configuration information to the first network device, where the second master-slave configuration information is used to indicate a master-slave relationship configured in the second network device. After receiving the second master-slave configuration information, the first network device determines, based on the second master-slave configuration information and a master-slave relationship configured in the first network device, whether a master-slave relationship is correctly configured between the first network device and the second network device.

The master-slave relationship between the first network device and the second network device may be that the first network device is the master end device and the second network device is a slave end device, or may be that the first network device is a slave end device and the second network device is the master end device. The master-slave relationship may be configured by a user in the first network device and the second network device, and may be changed as required.

In addition, the master-slave configuration information (including the first master-slave configuration information and the second master-slave configuration information) may be sent when a master-slave relationship is initially configured or reconfigured, or may be sent at a preset time interval. Two adjacent preset time intervals may be the same or may be different.

Optionally, the master-slave configuration information is sent by being carried in a FlexE information frame. For example, the master-slave configuration information is carried in a target field of the FlexE information frame. The target field may be the Management Channel-Section field or the Reserved field described above. This is not limited in this embodiment of this application. In addition, the master-slave configuration information may be carried in a first FlexE information frame that is sent after a master-slave relationship is initially configured or reconfigured, or may be carried in each FlexE information frame. For example, the master-slave configuration information is carried in a Management Channel-Section field of each FlexE overhead frame.

Through the negotiation, the master-slave relationship can be determined between the first network device and the second network device. When there is an unavailable link, the master end device selects a protection link and initiates a protection switching notification, to implement process simplification.

In addition, when determining that the master-slave relationship is not correctly configured, the first network device or the second network device may send alarm information, where the alarm information is used to indicate that the master-slave relationship is not accurately configured. In the foregoing manner, whether the master-slave relationship is accurately configured is detected, thereby ensuring accuracy of master-slave configuration.

Optionally, the first network device determines whether there is an unavailable link in the active FlexE link group in the following manner:
In a first manner, the first network device independently detects whether there is an unavailable link. The first network device detects whether a FlexE information frame sent by the second network device is correctly received on each link included in the active FlexE link group, and determines, based on a detection result, whether the link included in the active FlexE link group is available.

If the first network device correctly receives, on a specific link, a FlexE information frame sent by the second network device, the first network device determines that the link is available. If the first network device does not correctly receive, on a specific link, a FlexE information frame sent by the second network device, the first network device determines that the link is unavailable. For example, a FlexE overhead frame is usually sent once per 104.77µs. If the first network device does not receive, on a specific link, a FlexE overhead frame sent by the second network device within the time, the first network device determines that the link is unavailable. Alternatively, if the first network device receives, on a specific link, a FlexE information frame sent by the second network device, but received signal strength is less than a preset threshold, the first network device may also determine that the link is unavailable.

Optionally, after obtaining the detection result, the first network device sends receiving status information to the second network device, where the receiving status information is used to indicate whether the first network device correctly receives, on each link included in the active FlexE link group, the FlexE information frame sent by the second network device.

In a second manner, the first network device determines, based on receiving status information fed back by the second network device, whether there is an unavailable link. The second network device independently detects whether there is an unavailable link (refer to the foregoing description for a manner of detection), and sends receiving status information to the first network device, where the receiving status information is used to indicate whether a FlexE information frame sent by the first network device is correctly received on each link included in the active FlexE link group. Then, the first network device determines, based on the received receiving status information, whether the link included in the active FlexE link group is available.

A link between the first network device and the second network device is bidirectional. The first network device may independently detect whether a link is available in a direction from a peer end to a local end, and the second network device may also independently detect whether a link is available in a direction from a peer end to a local end.

For example, a link status indicated by receiving status information includes a normal (Normal) state, a signal fail (signal fail, SF) state, and a signal degrade (signal degrade, SD) state. The normal state indicates that a link is available, and the SF state and the SD state both indicate that a link is unavailable. The SF state means that a signal from a peer end cannot be detected. For example, a FlexE information frame sent by the peer end cannot be received. The SD state means that a signal from a peer end can be detected, but signal strength is relatively low. For example, a FlexE information frame sent by the peer end can be received, but a bit error exists. A link in each of the SF state and the SD state is unavailable and needs to be replaced with a protection link. Optionally, a link in the SF state is preferably replaced.

Optionally, the receiving status information is sent by being carried in a FlexE information frame. For example, the receiving status information is carried in a target field of the FlexE information frame. The target field may be the Management Channel-Section field or the Reserved field described above. This is not limited in this embodiment of this application. In addition, the receiving status information may be sent when a link status changes, or may be carried in each FlexE information frame. For example, the receiving status information is carried in a Management Channel-Section field of each FlexE overhead frame.

For example, a target field (such as a Management Channel-Section field) of a FlexE information frame is extended, so that the target field carries receiving status information, and master-slave indication information or switching action information. The switching action information may be the protection switching information or the protection switching response described above, or may be link restoration information or a link restoration response described below.

Information carried in a target field of a FlexE information frame transmitted on a link in the active FlexE link group is shown in Table 1 as follows:

**Table 1**

| Information carried in a target field | Usage | Transmission occasion |
|---|---|---|
| Receiving status information | The receiving status information is used to notify a peer end of a status of a FlexE information frame that is sent by the peer end and that is received by a local end on the link, where the status includes the normal state, the SF state and the SD state. | Always |
| Master-slave indication information | The master-slave indication information is used to notify a peer end of a master-slave relationship configured in a local end. | Always |

Information carried in a target field of a FlexE information frame transmitted on a standby link is shown in Table 2 as follows:

**Table 2**

| Information carried in a target field | Usage | Transmission occasion |
|---|---|---|
| Receiving status information | The receiving status information is used to notify a peer end of a status of a FlexE information frame that is sent by the peer end and that is received by a local end on the link, where the status includes the normal state, the SF state and the SD state. | Always |
| Switching action information | Switching action information sent from a master end device to a slave end device is used to instruct the slave end device to replace an unavailable link with a protection link (the switching action information is also referred to as the protection switching information herein) or replace a protection link with a link that is restored to available (the switching action information is also referred to as the link restoration information herein). | When switching occurs |
| | Switching action information sent by a slave end device to a master end device is used to notify the master end device of an execution result of switching (the switching action information, for example, is the protection switching response or the link restoration response). | |

In addition, in Table 1 and Table 2, that the transmission occasion is "always" indicates that information is carried in each FlexE information frame, and that the transmission occasion is "when switching occurs" indicates that information is carried in a specific FlexE information frame that is sent when switching needs to be performed.

As described above, a link may be unavailable in a direction from a master end device to a slave end device, or may alternatively be unavailable in a direction from a slave end device to a master end device.

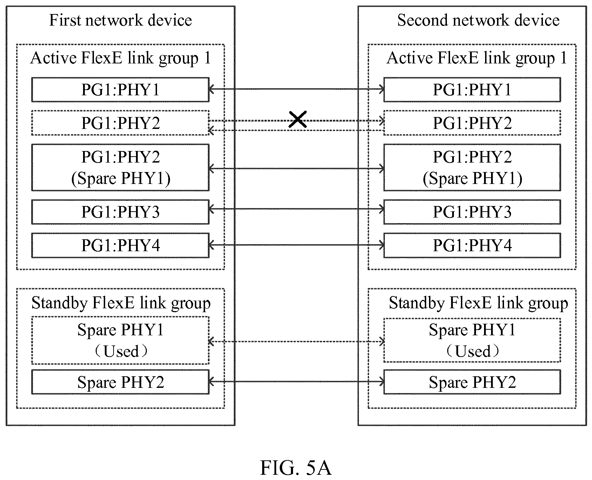

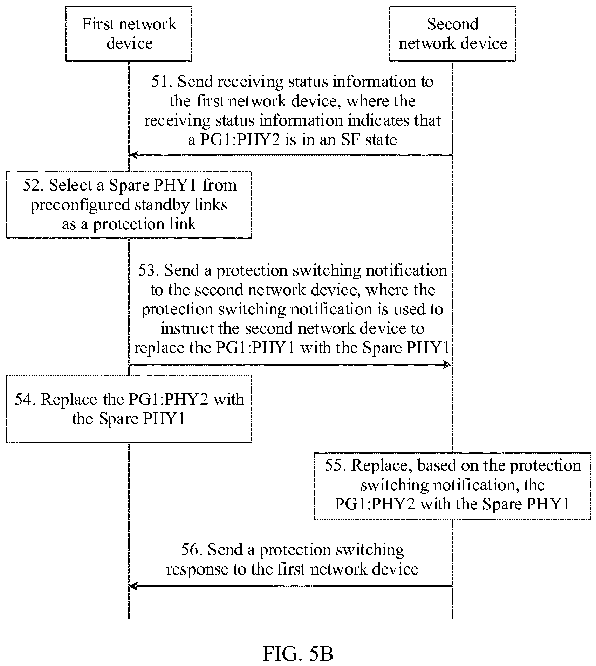

With reference to FIG. 5A and FIG. 5B, for example, a first network device is a master end device and a second network device is a slave end device. If a PG1 :PHY2 link in an active FlexE link group 1 is unavailable in a direction from the master end device to the slave end device, a corresponding protection switching process is as follows:
Step 51. The second network device sends receiving status information to the first network device, where the receiving status information indicates that the PG1:PHY2 is in an SF state.
Step 52. The first network device selects a Spare PHY1 from preconfigured standby links as a protection link.
Step 53. The first network device sends a protection switching notification to the second network device, where the protection switching notification is used to instruct the second network device to replace the PG1:PHY2 with the Spare PHY1.
Step 54. The first network device replaces the PG1:PHY2 with the Spare PHY1.
Step 55. The second network device replaces, based on the protection switching notification, the PG1 :PHY2 with the Spare PHY1.
Step 56. The second network device sends a protection switching response to the first network device.

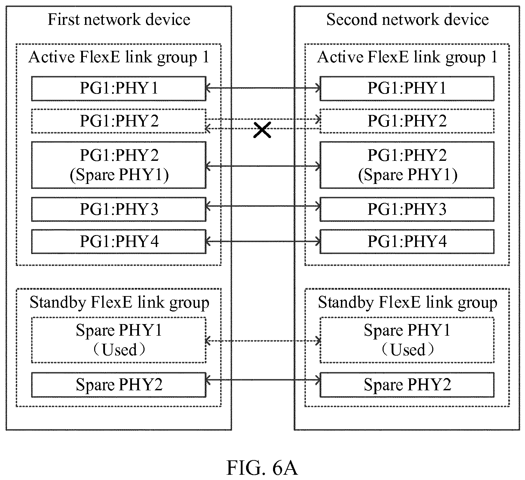

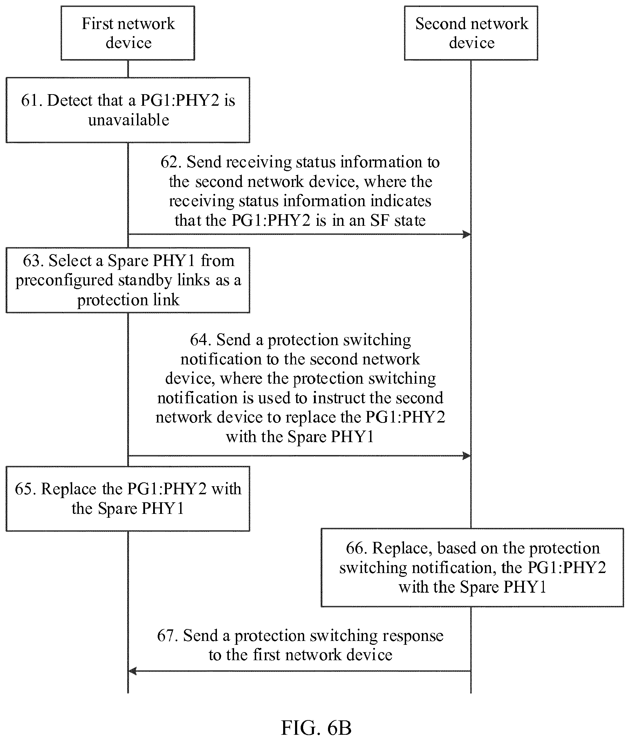

With reference to FIG. 6A and FIG. 6B, for example, a first network device is a master end device and a second network device is a slave end device. If a PG1:PHY2 link in an active FlexE link group 1 is unavailable in a direction from the slave end device to the master end device, a corresponding protection switching process is as follows:
Step 61. The first network device detects that the PG1:PHY2 is unavailable.
Step 62. The first network device sends receiving status information to the second network device, where the receiving status information indicates that the PG1:PHY2 is in an SF state.
Step 63. The first network device selects a Spare PHY1 from preconfigured standby links as a protection link.
Step 64. The first network device sends a protection switching notification to the second network device, where the protection switching notification is used to instruct the second network device to replace the PG1:PHY2 with the Spare PHY1.
Step 65. The first network device replaces the PG1:PHY2 with the Spare PHY1.
Step 66. The second network device replaces, based on the protection switching notification, the PG1 :PHY2 with the Spare PHY1.
Step 67. The second network device sends a protection switching response to the first network device.

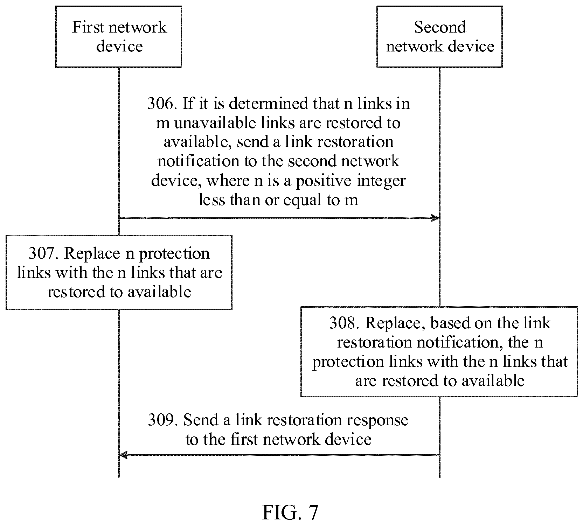

Optionally, as shown in FIG. 7, after replacing the m unavailable links with the m protection links, the first network device and the second network device further perform the following steps:
Step 306. If the first network device determines that n links in the m unavailable links are restored to available, the first network device sends a link restoration notification to the second network device, and n is a positive integer less than or equal to m.

The first network device may determine, in the manner of independent detection as described above or based on receiving status information sent by the second network device, whether an unavailable link is restored to available.

The link restoration notification is used to instruct the second network device to replace n protection links with the n links that are restored to available. The n links that are restored to available are in a one-to-one correspondence with the n protection links. In other words, one link that is restored to available is used to replace one protection link. Optionally, the link restoration notification indicates a correspondence between a protection link and a link that is restored to available. In other words, the link restoration notification indicates that a specific link that is restored to available is used to replace a specific protection link.

The first network device may send the protection switching notification to the second network device on any one or more available FlexE links. The available FlexE link may be a link that is not faulty in the active FlexE link group, for example, a link that is restored to available, or may be a protection link or another standby link. Alternatively, the first network device may send the link restoration notification to the second network device through another communication channel. The another communication channel includes but is not limited to an Etherchannel, an optical transmission network channel, or the like. This is not limited in this embodiment of this application.

Optionally, when the link restoration notification is sent on a FlexE link, the link restoration notification is a FlexE information frame. A target field of the FlexE information frame carries link restoration information, and the link restoration notification is used to instruct the second network device to replace the n protection links with the n links that are restored to available. For example, the target field may be a Management Channel-Section field, or may be a Reserved field. This is not limited in this embodiment of this application.

Step 307. The first network device replaces the n protection links with the n links that are restored to available.

Each of the n protection links is replaced by the first network device by using one of the n links that are restored to available.

If a first protection link in the n protection links belongs to the standby FlexE link group and is replaced with a first restored link, the first network device deletes the first protection link from the active FlexE link group and adds the first restored link to the active FlexE link group. The first restored link is one of the n links that are restored to available. If the first network device deletes the first protection link from the active FlexE link group, an association relationship is removed between the first protection link and the active FlexE link group. If the first network device adds the first restored link to the active FlexE link group, an association relationship is established between the first restored link and the active FlexE link group.

In an example, with reference to FIG. 2, it is assumed that the PG 1 :PHY2 is restored to available from being unavailable, and the first network device replaces the Spare PHY1 with the PG1:PHY2. The replacement process is the same as the replacement process of replacing an unavailable link with a protection link described above, and details are not described herein again.

If a second protection link in the n protection links belongs to the active FlexE link group and is replaced with a second restored link, the first network device applies slot configuration of the second protection link to the second restored link. The second restored link is one of the n links that arc restored to available.

In an example, with reference to FIG. 4, it is assumed that the PG1 :PHY2 is restored to available from being unavailable, and the first network device replaces the PG 1 : Spare PHY1 with the PG1:PHY2. The replacement process is the same as the replacement process of replacing the unavailable link with the protection link described above, and details are not described herein again.

Step 308. The second network device replaces, based on the link restoration notification, the n protection links with the n links that are restored to available.

After receiving the link restoration notification sent by the first network device, the second network device replaces, based on the link restoration notification, the n protection links with the n links that are restored to available.

A specific operation process in which the second network device replaces the protection link with the link that is restored to available is the same as a specific operation process performed by the first network device described in step 307. Reference may be made to the description in step 307, and details are not described herein again.

Step 309. The second network device sends a link restoration response to the first network device.

The link restoration response is used to indicate that the second network device has completed link replacement based on the link restoration notification.

The second network device may send the link restoration response to the first network device on any one or more available FlexE links. The available FlexE link may be a link that is not faulty in the active FlexE link group, for example, a link that is restored to available, or may be a protection link or another standby link. Alternatively, the second network device may send the link restoration response to the first network device through another communication channel. The another communication channel includes but is not limited to an Etherchannel, an optical transmission network channel, or the like. This is not limited in this embodiment of this application.

The first network device may send the protection switching notification to the second network device on any one or more available FlexE links. The available FlexE link may be a link that is not faulty in the active FlexE link group, for example, a link that is restored to available, or may be a protection link or another standby link. Alternatively, the first network device may send the link restoration notification to the second network device through another communication channel. The another communication channel includes but is not limited to an Etherchannel, an optical transmission network channel, or the like. This is not limited in this embodiment of this application.

In the solution provided in this embodiment of this application, when it is determined that a link is restored to available from being unavailable, the link that is restored to available is used to replace a protection link, to restore a standby link resource in a timely manner.

In addition, in another possible implementation, a non-revertive mode may also be used. To be specific, an unavailable link becomes a standby link after being replaced by a protection link, and the link restoration operation described in the foregoing embodiment does not need to be performed after the unavailable link is restored to available.

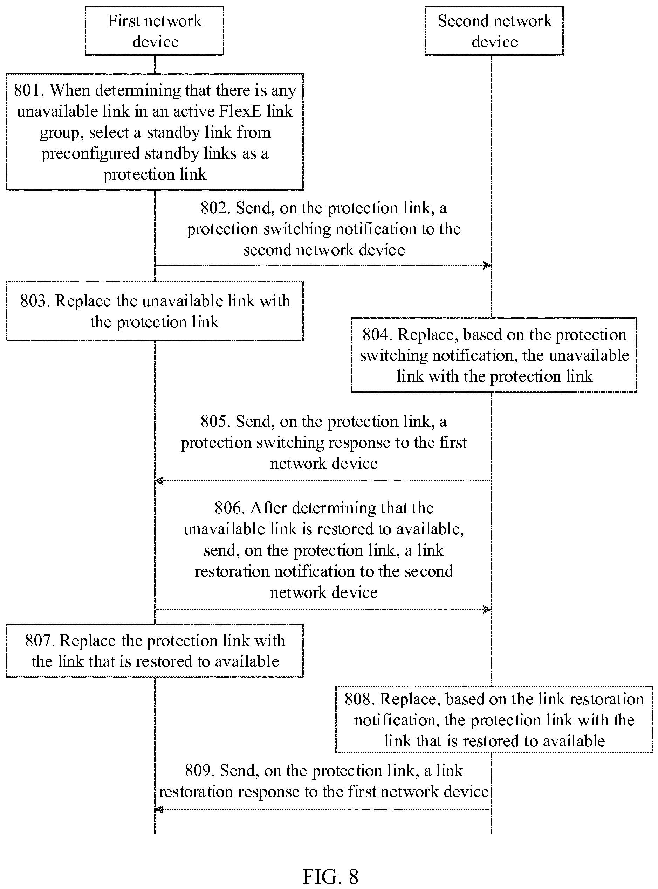

In an example, as shown in FIG. 8, for any link in an active FlexE link group, when determining that the link is unavailable (in other words, the link is an unavailable link), a first network device performs protection switching on the unavailable link in the following steps:
Step 801. When determining that there is any unavailable link in the active FlexE link group, the first network device selects a standby link from preconfigured standby links as a protection link.

In this embodiment, an example in which the protection switching scenario shown in FIG. 2 is used. When determining that the PG1 :PHY2 in the active FlexE link group 1 is unavailable, the first network device selects the Spare PHY1 from the standby FlexE link group as the protection link.

Step 802. The first network device sends, on the protection link, a protection switching notification to a second network device.

Optionally, the first network device sends a FlexE information frame to the second network device on the Spare PHY1, and a Management Channel-Section field of the FlexE information frame carries protection switching information. The protection switching information is used to instruct the second network device to replace the PG1:PHY2 with the Spare PHY1. For example, the protection switching information carries a number of the PG1:PHY2 and instruction information of a protection switching action.

Step 803. The first network device replaces the unavailable link with the protection link.

The first network device deletes the PG1:PHY2 from the active FlexE link group 1, deletes the Spare PHY1 from the standby FlexE link group, and then adds the Spare PHY1 to the active FlexE link group 1. Optionally, the first network device further adds the PG1:PHY2 to the standby FlexE link group.

Step 804. The second network device replaces, based on the protection switching notification, the unavailable link with the protection link.

After receiving the protection switching notification, the second network device deletes, based on the protection switching notification, the PG1:PHY2 from the active FlexE link group 1 and the Spare PHY1 from the standby FlexE link group, and then adds the Spare PHY1 to the active FlexE link group 1. Optionally, the second network device further adds the PG1:PHY2 to the standby FlexE link group.

Step 805. The second network device sends, on the protection link, a protection switching response to the first network device.

After completing the protection switching action, the second network device sends a FlexE information frame to the first network device on the Spare PHY1, and a Management Channel-Section field of the FlexE information frame carries the protection switching response.

Optionally, if a revertive mode is used, as shown in FIG. 8, this embodiment further includes the following steps:
Step 806. After determining that the unavailable link is restored to available, the first network device sends, on the protection link, a link restoration notification to the second network device.

Optionally, after determining that the PG1:PHY2 is restored to available from being unavailable, the first network device sends a FlexE information frame to the second network device on the Spare PHY1, and a Management Channel-Section field of the FlexE information frame carries link restoration information. The link restoration information is used to instruct the second network device to replace the Spare PHY1 with the PG1:PHY2. For example, the link restoration information carries the number of the PG1 :PHY2 and indication information of a link restoration action.

Step 807. The first network device replaces the protection link with the link that is restored to available.

The first network device deletes the Spare PHY1 from the active FlexE link group 1, adds the PG1 :PHY2 that is restored to available to the active FlexE link group 1, and adds the Spare PHY1 to the standby FlexE link group.

Step 808. The second network device replaces, based on the link restoration notification, the protection link with the link that is restored to available.

After receiving the link restoration notification, the second network device deletes, based on the link restoration notification, the Spare PHY1 from the active FlexE link group 1, adds the PG1:PHY2 that is restored to available to the active FlexE link group 1, and adds the Spare PHY1 to the standby FlexE link group.

Step 809. The second network device sends, on the protection link, a link restoration response to the first network device.

After completing the link restoration action, the second network device sends a FlexE information frame to the first network device on the Spare PHY1, and a Management Channel-Section field of the FlexE information frame carries the link restoration response.

It should be noted that, in this embodiment, that the link restoration notification and the link restoration response are sent on the protection link is merely used as an example. In another possible implementation, the link restoration notification and the link restoration response may alternatively be sent on the link that is restored to available.

For any link in the active FlexE link group, when the link is unavailable, a protection link may be selected in the manner provided in this embodiment, and protection switching is performed on the unavailable link by using the protection link.

In the following, examples are used to describe application scenarios of the technical solutions provided in the embodiments of this application.

### 1. Scenario of direct connection through a FlexE interface between data devices

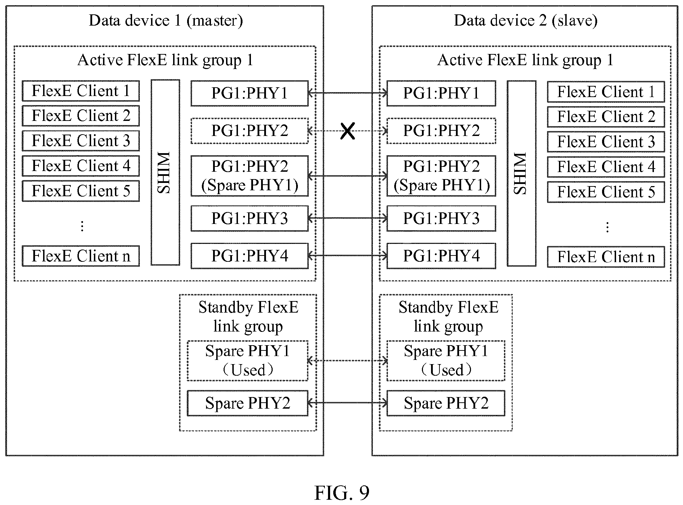

As shown in FIG. 9, two data devices (including a data device 1 and a data device 2) are directly connected by using a FlexE interface. The data device 1 is used as a master end device and the data device 2 is used as a slave end device. An active FlexE link group 1 is configured between the data device 1 and the data device 2, and the active FlexE link group 1 includes four links. A standby FlexE link group is further configured between the data device 1 and the data device 2, and the standby FlexE link group includes two standby links. For example, when a PG1:PHY2 in the active FlexE link group 1 is unavailable, a Spare PHY1 in the standby FlexE link group is used as a protection link to replace the PG1 :PHY2.

### 2. Application scenario of FlexE termination in a transport network

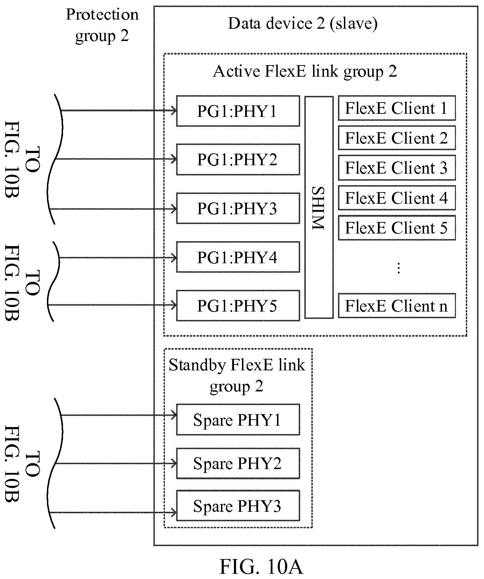

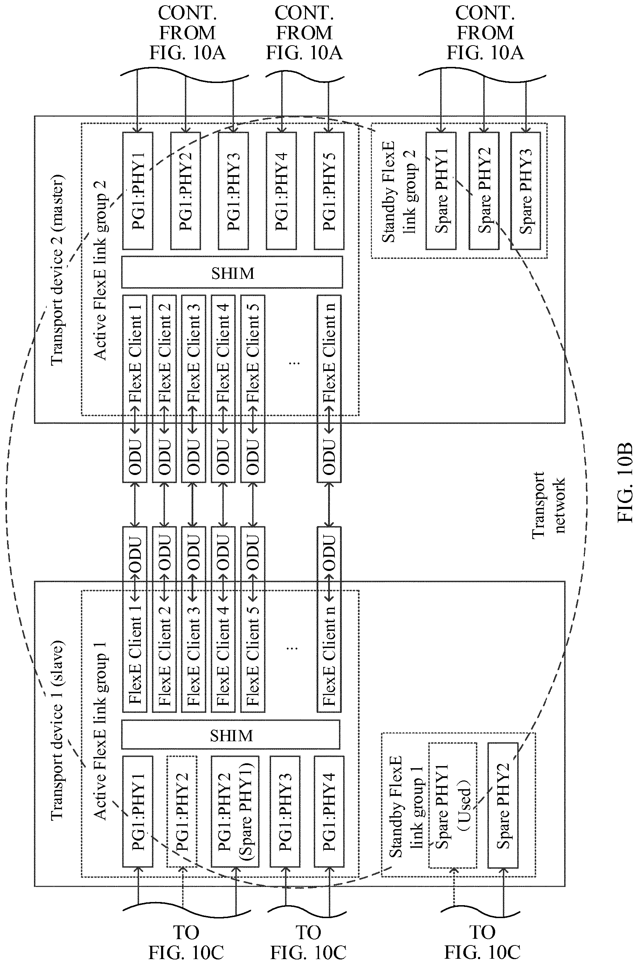

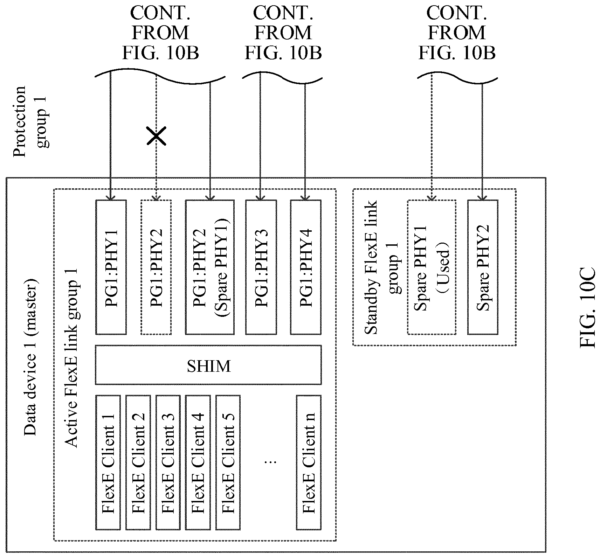

In this application scenario, as shown in FIG. 10A, FIG. 10B and FIG. 10C, a transport network device (for example, a transport device 1 or a transport device 2 in the figure) restores a FlexE signal to a FlexE Client level for transmission. Two protection groups (for example, a protection group 1 and a protection group 2 shown in the figure) are configured at two ends of at an access of the transport network, and a FlexE interface between a data device and a transport device is protected by using the protection group. Configuration of the two protection groups is independent of each other.

As shown in FIG. 10A, FIG. 10B and FIG. 10C, the protection group 1 includes a data device 1 and the transport device 1. The data device 1 is used as a master end device and the transport device 1 is used as a slave end device. An active FlexE link group 1 is configured between the data device 1 and the transport device 1, and the active FlexE link group 1 includes four links. A standby FlexE link group 1 is further configured between the data device 1 and the transport device 1, and the standby FlexE link group 1 includes two standby links. For example, when a PG1:PHY2 in the active FlexE link group 1 is unavailable, a Spare PHY1 in the standby FlexE link group 1 is used as a protection link to replace the PG1:PHY2. The protection group 2 includes the transport device 2 and a data device 2. An active FlexE link group 2 is configured between the transport device 2 and the data device 2, and the active FlexE link group 2 includes five links. A standby FlexE link group 2 is further configured between the transport device 2 and the data device 2, and the standby FlexE link group 2 includes three standby links.

### 3. Application scenario of FlexE aware in a transport network

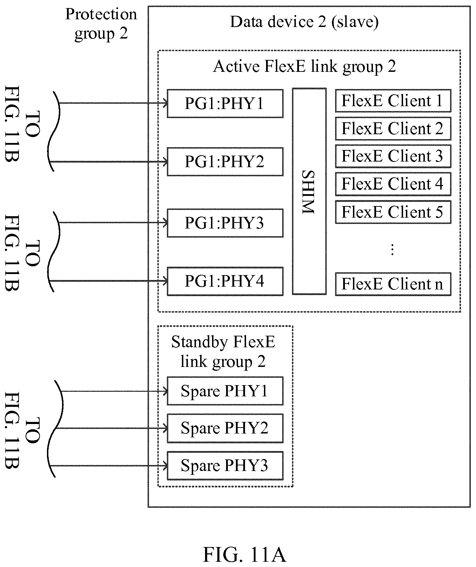

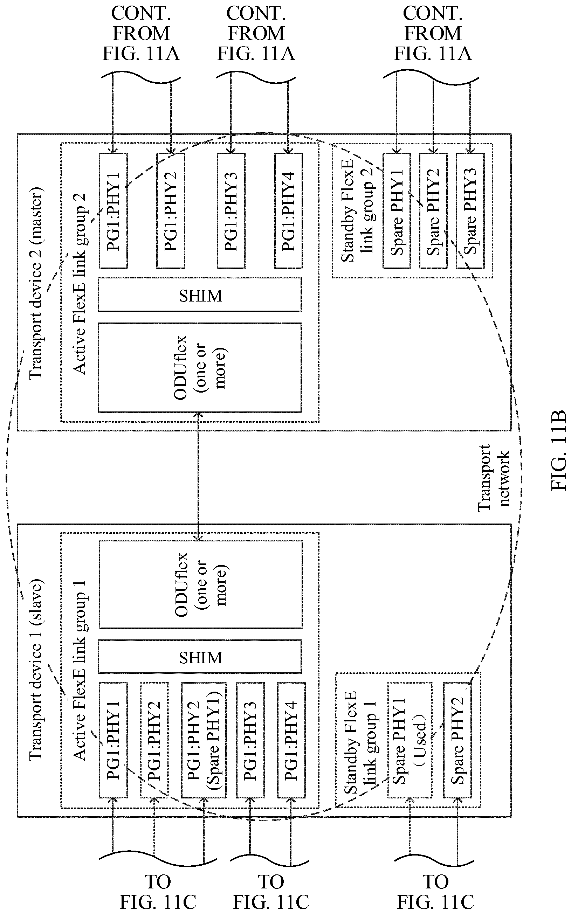

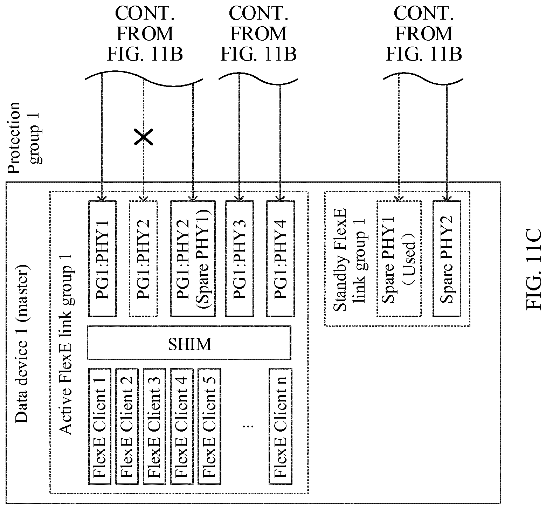

In this application scenario, as shown in FIG. 11A, FIG. 11B, and FIG. 11C, a transport network device (for example, a transport device 1 or a transport device 2 in the figure) transmits FlexE overheads and payloads. Two protection groups (for example, a protection group 1 and a protection group 2 shown in the figure) are configured at two ends of at an access of the transport network, and a FlexE interface between a data device and a transport device is protected by using the protection group. Configuration of the two protection groups is independent of each other.

As shown in FIG. 11A, FIG. 11B, and FIG. 11C, the protection group 1 includes a data device 1 and the transport device 1. The data device 1 is used as a master end device and the transport device 1 is used as a slave end device. An active FlexE link group 1 is configured between the data device 1 and the transport device 1, and the active FlexE link group 1 includes four links. A standby FlexE link group 1 is further configured between the data device 1 and the transport device 1, and the standby FlexE link group 1 includes two standby links. For example, when a PG1:PHY2 in the active FlexE link group 1 is unavailable, a Spare PHY1 in the standby FlexE link group 1 is used as a protection link to replace the PG1:PHY2. The protection group 2 includes the transport device 2 and a data device 2. An active FlexE link group 2 is configured between the transport device 2 and the data device 2, and the active FlexE link group 2 includes four links. A standby FlexE link group 2 is further configured between the transport device 2 and the data device 2, and the standby FlexE link group 2 includes three standby links.

The foregoing mainly describes the solutions provided in the embodiments of this application from a perspective of interaction between a first network device and a second network device. It may be understood that, to implement the foregoing functions, a network device (for example, the first network device or the second network device) includes hardware structures and/or software modules corresponding to execution of the functions. With reference to the units and algorithm steps described in the embodiments disclosed in this application, embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in the embodiments of this application.

In the embodiments of this application, functional units of the network device (for example, the first network device or the second network device) may be classified based on the foregoing method embodiments. For example, functional units may be classified based on corresponding functions, or two or more functions may be integrated into one processing unit. The integrated unit may be implemented in a form of hardware, or may be implemented in a form of a software functional unit. It should be noted that, in this embodiment of this application, unit division is an example, and is merely logical function division. In actual implementation, another division manner may be used.

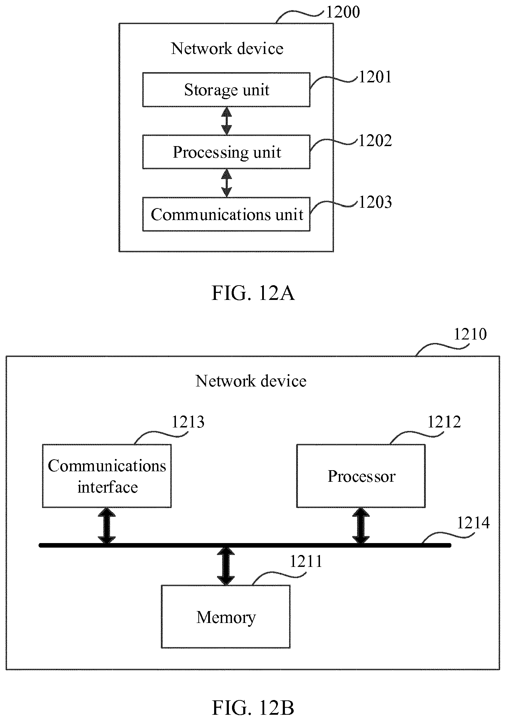

When an integrated unit is used, FIG. 12A is a possible schematic structural diagram of the network device in the foregoing embodiments. A network device 1200 includes a processing unit 1202 and a communications unit 1203. The processing unit 1202 is configured to control and manage an action of the network device 1200. For example, when the network device 1200 is a first network device, the processing unit 1202 is configured to support the network device 1200 in performing steps 301 to 303 in FIG. 3, steps 306 and 307 in FIG. 7, and steps 801 to 803 and steps 806 and 807 in FIG. 8, and/or is configured to perform another step in the technology described in this specification. When the network device 1200 is a second network device, the processing unit 1202 is configured to support the network device 1200 in performing steps 304 and 305 in FIG. 3, steps 308 and 309 in FIG. 7, and steps 804, 805, 808 and 809 in FIG. 8, and/or is configured to perform another step in the technology described in this specification. The communications unit 1203 is configured to support the network device 1200 in communicating with another network device. The network device 1200 may further include a storage unit 1201 that is configured to store program code and data of the network device 1200.

The processing unit 1202 may be a processor or a controller, for example, may be a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The processing module 1202 may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The communications unit 1203 may be a communications interface, a transceiver, a transceiver circuit, or the like. The communications interface is a general term, and may include one or more interfaces, for example, an interface between the first network device and the second network device. The storage unit 1201 may be a memory.

When the processing unit 1202 is a processor, the communications unit 1203 is a communications interface, and the storage unit 1201 is a memory, the network device in this embodiment of this application may be the network device shown in FIG. 12B.

Referring to FIG. 12B, the network device 1210 includes a processor 1212, a communications interface 1213, and a memory 1211. Optionally, the network device 1210 may further include a bus 1214. The communications interface 1213, the processor 1212, and the memory 1211 may be connected to each other through the bus 1214. The bus 1214 may be a peripheral component interconnect (Peripheral Component Interconnect, PCI for short) bus, an extended industry standard architecture (Extended Industry Standard Architecture, EISA for short) bus, or the like. The bus 1214 may be classified into an address bus, a data bus, a control bus, and the like. For ease of representation, only one thick line is used to represent the bus in FIG. 12B, but this does not mean that there is only one bus or only one type of bus.

The network device shown in FIG. 12A or FIG. 12B may be the first network device or the second network device.

Methods or algorithm steps described with reference to the content disclosed in the embodiments of this application may be implemented by hardware, or may be implemented by a processor by executing a software instruction. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a network device. Certainly, the processor and the storage medium may exist in the network device as discrete components.

A person skilled in the art should be aware that in the foregoing one or more examples, functions described in the embodiments of this application may be implemented by hardware, software, firmware, or any combination thereof. When being implemented by software, the foregoing functions may be stored in a computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

In the foregoing specific implementations, the objectives, technical solutions, and benefits of the embodiments of this application are further described in detail. It should be understood that the scope of the invention is defined by the appended claims and that the foregoing descriptions are merely specific implementations of the embodiments of this application.

## Claims

1. A protection switching method, wherein the method comprises:
determining, by a first network device (11), that there is at least one unavailable link in an active Flexible Ethernet, FlexE, link group, and selecting m standby links from preconfigured standby links as protection links, wherein the active FlexE link group comprises a plurality of links that are logically bonded, and m is a positive integer less than or equal to a quantity of unavailable links in the active FlexE link group;
sending, by the first network device (11), a protection switching notification to a second network device (12), and replacing m unavailable links in the at least one unavailable link with the m protection links, wherein the protection switching notification is used to instruct the second network device (12) to replace the m unavailable links with the m protection links, and the m protection links are in a one-to-one correspondence with the m unavailable links;
receiving, by the first network device (11), a protection switching response sent by the second network device (12);
wherein the replacing, by the first network device, m unavailable links in the at least one unavailable link with the m protection links comprises:
if a first protection link in the m protection links belongs to a standby FlexE link group and is used to replace a first unavailable link, deleting, by the first network device (11), the first unavailable link from the active FlexE link group, and adding the first protection link to the active FlexE link group;
wherein any protection link in the standby FlexE link group may be used to provide protection switching for any link in any active FlexE link group;
wherein an unavailable link becomes a standby link after being replaced by a protection link and after the unavailable link is restored to available; and
wherein when determining that there is at least one unavailable link in the active FlexE link group, the first network device (11) selects the m standby links as protection links from the standby FlexE link group based on the following conditions: there is no preconfigured standby link or selectable standby link in the active FlexE link group, and there is a selectable standby link in the standby FlexE link group.

2. The method according to claim 1, wherein the protection switching notification is a FlexE information frame, a target field of the FlexE information frame carries protection switching information, and the protection switching information is used to instruct the second network device (12) to replace the m unavailable links with the m protection links.

3. A protection switching method, wherein the method comprises:
receiving, by a second network device (12), a protection switching notification sent by a first network device (11), wherein the protection switching notification is sent by the first network device (11) after the first network device (11) selects m standby links from preconfigured standby links as protection links when the first network device (11) determines that there is at least one unavailable link in an active Flexible Ethernet, FlexE, link group, wherein the active FlexE link group comprises a plurality of links that are logically bonded, the protection switching notification is used to instruct the second network device (12) to replace m unavailable links in the at least one unavailable link with the m protection links, the m protection links are in a one-to-one correspondence with the m unavailable links, and m is a positive integer less than or equal to a quantity of unavailable links in the active FlexE link group;
replacing, by the second network device (12) based on the protection switching notification, the m unavailable links with the m protection links;
sending, by the second network device (12), a protection switching response to the first network device (11);
wherein the replacing, by the second network device, the m unavailable links with the m protection links comprises:
if a first protection link in the m protection links belongs to a standby FlexE link group and is used to replace a first unavailable link, deleting, by the second network device (12), the first unavailable link from the active FlexE link group, and adding the first protection link to the active FlexE link group;
wherein any protection link in the standby FlexE link group may be used to provide protection switching for any link in any active FlexE link group;
wherein an unavailable link becomes a standby link after being replaced by a protection link and after the unavailable link is restored to available; and
wherein when determining that there is at least one unavailable link in the active FlexE link group, the first network device (11) selects the m standby links as protection links from the standby FlexE link group based on the following conditions: there is no preconfigured standby link or selectable standby link in the active FlexE link group, and there is a selectable standby link in the standby FlexE link group.

4. A network device (1200), wherein the network device (1200) is a first network device (11) and the network device (1200) comprises a processing unit (1202) and a communications unit (1203), wherein
the processing unit (1202) is configured to determine that there is at least one unavailable link in an active Flexible Ethernet, FlexE, link group and select m standby links from preconfigured standby links as protection links, wherein the active FlexE link group comprises a plurality of links that are logically bonded, and m is a positive integer less than or equal to a quantity of unavailable links in the active FlexE link group; and
the communications unit (1203) is configured to send a protection switching notification to a second network device (12), the protection switching notification is used to instruct the second network device (12) to replace m unavailable links in the at least one unavailable link with the m protection links, and the m protection links are in a one-to-one correspondence with the m unavailable links, wherein
the processing unit (1202) is further configured to replace the m unavailable links with the m protection links,
the communications unit (1203) is further configured to receive a protection switching response sent by the second network device(12);
wherein the processing unit is configured to:
if a first protection link in the m protection links belongs to a standby FlexE link group and is used to replace a first unavailable link, delete the first unavailable link from the active FlexE link group and add the first protection link to the active FlexE link group;
wherein any protection link in the standby FlexE link group may be used to provide protection switching for any link in any active FlexE link group;
wherein an unavailable link becomes a standby link after being replaced by a protection link and after the unavailable link is restored to available; and
wherein when determining that there is at least one unavailable link in the active FlexE link group, the first network device (11) selects the m standby links as protection links from the standby FlexE link group based on the following conditions: there is no preconfigured standby link or selectable standby link in the active FlexE link group, and there is a selectable standby link in the standby FlexE link group.

5. The network device (1200) according to claim 4, wherein the protection switching notification is a FlexE information frame, a target field of the FlexE information frame carries protection switching information, and the protection switching information is used to instruct the second network device (12) to replace the m unavailable links with the m protection links.

6. A network device (1200), wherein the network device (1200) is a second network device (12) and the network device (1200) comprises a processing unit (1202) and a communications unit (1203), wherein
the communications unit (1203) is configured to receive a protection switching notification sent by a first network device (11), wherein the protection switching notification is sent by the first network device (11) after the first network device (11) selects m standby links from preconfigured standby links as protection links when the first network device (11) determines that there is at least one unavailable link in an active Flexible Ethernet, FlexE, link group, wherein the active FlexE link group comprises a plurality of links that are logically bonded, the protection switching notification is used to instruct the second network device (12) to replace m unavailable links in the at least one unavailable link with the m protection links, the m protection links are in a one-to-one correspondence with the m unavailable links, and m is a positive integer less than or equal to a quantity of unavailable links in the active FlexE link group;
the processing unit (1202) is configured to replace, based on the protection switching notification, the m unavailable links with the m protection links, wherein
the communications unit (1203) is further configured to send a protection switching response to the first network device (11);
wherein the processing unit is configured to:
if a first protection link in the m protection links belongs to a standby FlexE link group and is used to replace a first unavailable link, delete the first unavailable link from the active FlexE link group and add the first protection link to the active FlexE link group; and
wherein any protection link in the standby FlexE link group may be used to provide protection switching for any link in any active FlexE link group;
wherein an unavailable link becomes a standby link after being replaced by a protection link and after the unavailable link is restored to available; and
wherein when determining that there is at least one unavailable link in the active FlexE link group, the first network device (11) selects the m standby links as protection links from the standby FlexE link group based on the following conditions: there is no preconfigured standby link or selectable standby link in the active FlexE link group, and there is a selectable standby link in the standby FlexE link group.

## Patentansprüche

1. Schutzschaltverfahren, wobei das Verfahren Folgendes umfasst:
Feststellen, durch eine erste Netzwerkvorrichtung (11), dass es mindestens eine nicht verfügbare Verbindung in einer aktiven Flexible Ethernet-, FlexE-Verbindungsgruppe gibt, und Auswählen von m Standbyverbindungen aus vorkonfigurierten Standbyverbindungen als Schutzverbindungen, wobei die aktive FlexE-Verbindunsgruppe mehrere Verbindungen umfasst, die logisch verbunden sind, und m eine positive ganze Zahl ist, die kleiner oder gleich einer Menge nicht verfügbarer Verbindungen in der aktiven FlexE-Verbindungsgruppe ist;
Senden einer Schutzschaltbenachrichtigung durch die erste Netzwerkvorrichtung (11) an eine zweite Netzwerkvorrichtung (12) und Ersetzen von m nicht verfügbaren Verbindungen in der mindestens einen nicht verfügbaren Verbindung durch die m Schutzverbindungen, wobei die Schutzschaltbenachrichtigung verwendet wird, um die zweite Netzwerkvorrichtung (12) anzuweisen, die m nicht verfügbaren Verbindungen durch die m Schutzverbindungen zu ersetzen, und die m Schutzverbindungen in einer Eins-zu-eins-Entsprechung mit den m nicht verfügbaren Verbindungen stehen;
Empfangen einer von der zweiten Netzwerkvorrichtung (12) gesendeten Schutzschaltantwort durch die erste Netzwerkvorrichtung (11);
wobei das Ersetzen der m nicht verfügbaren Verbindungen in der mindestens einen nicht verfügbaren Verbindung durch die m Schutzverbindungen durch die erste Netzwerkvorrichtung Folgendes umfasst:
wenn eine erste Schutzverbindung in den m Schutzverbindungen zu einer Standby-FlexE-Verbindungsgruppe gehört und zum Ersetzen einer ersten nicht verfügbaren Verbindung verwendet wird, Löschen der ersten nicht verfügbaren Verbindung aus der aktiven FlexE-Verbindungsgruppe durch die erste Netzwerkvorrichtung (11), und Hinzufügen der ersten Schutzverbindung zur aktiven FlexE-Verbindungsgruppe;
wobei jede Schutzverbindung in der Standby-FlexE-Verbindungsgruppe verwendet werden kann, um Schutzumschaltung für jede Verbindung in jeder aktiven FlexE-Verbindungsgruppe bereitzustellen;
wobei eine nicht verfügbarer Verbindung zu einem Standbyverbindung wird, nachdem sie durch eine Schutzverbindung ersetzt wurde und nachdem die nicht verfügbare Verbindung wieder verfügbar wurde; und
wobei die erste Netzwerkvorrichtung (11) beim Feststellen, dass es mindestens eine nicht verfügbare Verbindung in der aktiven FlexE-Verbindungsgruppe gibt, die m StandbyVerbindungen als Schutzverbindungen aus der Standby-FlexE-Verbindungsgruppe basierend auf den folgenden Bedingungen auswählt: es gibt keine vorkonfigurierte Standbyverbindung oder auswählbare Standbyverbindung in der aktiven FlexE-Verbindungsgruppe, und es gibt einen auswählbaren Standbyverbindungen in der Standby-FlexE-Verbindungsgruppe.

2. Verfahren nach Anspruch 1, wobei die Schutzschaltbenachrichtigung ein FlexE-Informationsrahmen ist, ein Zielfeld des FlexE-Informationsrahmens Schutzschaltinformationen trägt und die Schutzschaltinformationen verwendet werden, um die zweite Netzwerkvorrichtung (12) anzuweisen, die m nicht verfügbaren Verbindungen durch die m Schutzlverbindungen zu ersetzen.

3. Schutzschaltverfahren, wobei das Verfahren Folgendes umfasst:
Empfangen einer von einer ersten Netzvorrichtung (11) gesendeten Schutzschaltbenachrichtigung durch eine zweite Netzwerkvorrichtung (12), wobei die Schutzschaltbenachrichtigung durch die erste Netzwerkvorrichtung (11) gesendet wird, nachdem die erste Netzwerkvorrichtung (11) m Standbyverbindungen von vorkonfigurierten Standbyverbindungen als Schutzverbindungen ausgewählt hat, wenn die erste Netzwerkvorrichtung (11) feststellt, dass es mindestens eine nicht verfügbare Verbindung in einer aktiven Flexible Ethernet-, FlexE-, Verbindungsgruppe gibt, wobei die aktive FlexE-Verbindungsgruppe eine Vielzahl von Verbindungen umfasst, die logisch verbunden sind, wobei die Schutzschaltbenachrichtigung verwendet wird, um die zweite Netzwerkvorrichtung (12) anzuweisen, m nicht verfügbare Verbindungen in der mindestens einen nicht verfügbaren Verbindung durch die m Schutzverbindungen zu ersetzen, wobei die m Schutzverbindungen in einer Eins-zu-eins-Entsprechung mit den m nicht verfügbaren Verbindungen stehen und m eine positive ganze Zahl ist, die kleiner oder gleich einer Anzahl nicht verfügbarer Verbindungen in der aktiven FlexE-Verbindungsgruppe ist;
Ersetzen der m nicht verfügbaren Verbindungen durch die m Schutzverbindungen durch die zweite Netzwerkvorrichtung (12) basierend auf der Schutzschaltbenachrichtigung;
Senden einer Schutzschaltantwort durch die zweite Netzwerkvorrichtung (12) an die erste Netzwerkvorrichtung (11) ;
wobei das Ersetzen der m nicht verfügbaren Verbindungen durch die m Schutzverbindungen durch die zweite Netzwerkvorrichtung Folgendes umfasst:
wenn eine erste Schutzverbindung in den m Schutzverbindungen zu einer Standby-FlexE-Verbindungsgruppe gehört und zum Ersetzen einer ersten nicht verfügbaren Verbindung verwendet wird, Löschen der ersten nicht verfügbaren Verbindung aus der aktiven FlexE-Verbindungsgruppe durch die zweite Netzwerkvorrichtung (12), und Hinzufügen der ersten Schutzverbindung zur aktiven FlexE-Verbindungsgruppe;
wobei jede Schutzverbindung in der Standby-FlexE-Verbindungsgruppe verwendet werden kann, um Schutzumschaltung für jede Verbindung in jeder aktiven FlexE-Verbindungsgruppe bereitzustellen;
wobei eine nicht verfügbarer Verbindung zu einem Standbyverbindung wird, nachdem sie durch eine Schutzverbindung ersetzt wurde und nachdem die nicht verfügbare Verbindung wieder verfügbar wurde; und
wobei die erste Netzwerkvorrichtung (11) beim Feststellen, dass es mindestens eine nicht verfügbare Verbindung in der aktiven FlexE-Verbindungsgruppe gibt, die m StandbyVerbindungen als Schutzverbindungen aus der Standby-FlexE-Verbindungsgruppe basierend auf den folgenden Bedingungen auswählt: es gibt keine vorkonfigurierte Standbyverbindung oder auswählbare Standbyverbindung in der aktiven FlexE-Verbindungsgruppe, und es gibt einen auswählbaren Standbyverbindungen in der Standby-FlexE-Verbindungsgruppe.

4. Netzwerkvorrichtung (1200), wobei die Netzwerkvorrichtung (1200) eine erste Netzwerkvorrichtung (11) ist und die Netzwerkvorrichtung (1200) eine Verarbeitungseinheit (1202) und eine Kommunikationseinheit (1203) umfasst, wobei
die Verarbeitungseinheit (1202) so konfiguriert ist, dass sie feststellt, dass es mindestens eine nicht verfügbare Verbindung in einer aktiven Flexible Ethernet-, FlexE-Verbindungsgruppe gibt, und m Standbyverbindungen aus vorkonfigurierten Standbyverbindungen als Schutzverbindungen auswählt, wobei die aktive FlexE-Link-Gruppe mehrere Verbindungen umfasst, die logisch verbunden sind, und m eine positive ganze Zahl ist, die kleiner oder gleich einer Menge nicht verfügbarer Verbindungen in der aktiven FlexE-Verbindungsgruppe ist; und
die Kommunikationseinheit (1203) so konfiguriert ist, dass sie eine Schutzschaltbenachrichtigung an eine zweite Netzwerkvorrichtung (12) sendet, wobei die Schutzschaltbenachrichtigung verwendet wird, um die zweite Netzwerkvorrichtung (12) anzuweisen, m nicht verfügbare Verbindungen in der mindestens einen nicht verfügbaren Verbindung mit den m Schutzverbindungen zu ersetzen und die m Schutzverbindungen in einer Eins-zu-Eins-Korrespondenz mit den m nicht verfügbaren Verbindungen stehen, wobei
die Verarbeitungseinheit (1202) ferner so konfiguriert ist, dass sie die m nicht verfügbaren Verbindungen durch die m Schutzverbindungen ersetzt,
die Kommunikationseinheit (1203) ferner so konfiguriert ist, dass sie eine von der zweiten Netzwerkverbindung (12) gesendete Schutzschaltantwort empfängt;
wobei die Verarbeitungseinheit für Folgendes konfiguriert ist:
wenn eine erste Schutzverbindung in den m Schutzverbindungen zu einer Standby-FlexE-Verbindungsgruppe gehört und zum Ersetzen einer ersten nicht verfügbaren Verbindung verwendet wird, Löschen der ersten nicht verfügbaren Verbindung aus der aktiven FlexE-Verbindungsgruppe und Hinzufügen der ersten Schutzverbindung zur aktiven FlexE-Verbindungsgruppe;
wobei jede Schutzverbindung in der Standby-FlexE-Verbindungsgruppe verwendet werden kann, um Schutzumschaltung für jede Verbindung in jeder aktiven FlexE-Verbindungsgruppe bereitzustellen;
wobei eine nicht verfügbarer Verbindung zu einem Standbyverbindung wird, nachdem sie durch eine Schutzverbindung ersetzt wurde und nachdem die nicht verfügbare Verbindung wieder verfügbar wurde; und
wobei die erste Netzwerkvorrichtung (11) beim Feststellen, dass es mindestens eine nicht verfügbare Verbindung in der aktiven FlexE-Verbindungsgruppe gibt, die m StandbyVerbindungen als Schutzverbindungen aus der Standby-FlexE-Verbindungsgruppe basierend auf den folgenden Bedingungen auswählt: es gibt keine vorkonfigurierte Standbyverbindung oder auswählbare Standbyverbindung in der aktiven FlexE-Verbindungsgruppe, und es gibt einen auswählbaren Standbyverbindungen in der Standby-FlexE-Verbindungsgruppe.

5. Netzwerkvorrichtung (1200) nach Anspruch 4, wobei die Schutzschaltbenachrichtigung ein FlexE-Informationsrahmen ist, ein Zielfeld des FlexE-Informationsrahmens Schutzschaltinformationen trägt und die Schutzschaltinformationen verwendet werden, um die zweite Netzwerkvorrichtung (12) anzuweisen, die m nicht verfügbaren Verbindungen durch die m Schutzverbindungen zu ersetzen.

6. Netzwerkvorrichtung (1200), wobei die Netzwerkvorrichtung (1200) eine zweite Netzwerkvorrichtung (12) ist und die Netzwerkvorrichtung (1200) eine Verarbeitungseinheit (1202) und eine Kommunikationseinheit (1203) umfasst, wobei die Kommunikationseinheit (1203) so konfiguriert ist, dass sie eine von einer ersten Netzwerkvorrichtung (11) gesendete Schutzschaltbenachrichtigung empfängt, wobei die Schutzschaltbenachrichtigung durch die erste Netzwerkvorrichtung (11) gesendet wird, nachdem die erste Netzwerkvorrichtung (11) m Standbyverbindungen von vorkonfigurierten Standbyverbindungen als Schutzverbindungen ausgewählt hat, wenn die erste Netzwerkvorrichtung (11) feststellt, dass es mindestens eine nicht verfügbare Verbindung in einer aktiven Flexible Ethernet-, FlexE-, Verbindungsgruppe gibt, wobei die aktive FlexE-Verbindungsgruppe eine Vielzahl von Verbindungen umfasst, die logisch verbunden sind, wobei die Schutzschaltbenachrichtigung verwendet wird, um die zweite Netzwerkvorrichtung (12) anzuweisen, m nicht verfügbare Verbindungen in der mindestens einen nicht verfügbaren Verbindung durch die m Schutzverbindungen zu ersetzen, wobei die m Schutzverbindungen in einer Eins-zu-eins-Entsprechung mit den m nicht verfügbaren Verbindungen stehen und m eine positive ganze Zahl ist, die kleiner oder gleich einer Anzahl nicht verfügbarer Verbindungen in der aktiven FlexE-Verbindungsgruppe ist;
die Verarbeitungseinheit (1202) so konfiguriert ist, dass sie basierend auf der Schutzschaltbenachrichtigung die m nicht verfügbaren Verbindungen durch die m Schutzverbindungen ersetzt, wobei
die Kommunikationseinheit (1203) ferner so konfiguriert ist, dass sie eine Schutzschaltantwort an die erste Netzwerkvorrichtung (11) sendet;
wobei die Verarbeitungseinheit für Folgendes konfiguriert ist:
wenn eine erste Schutzverbindung in den m Schutzverbindungen zu einer Standby-FlexE-Verbindungsgruppe gehört und zum Ersetzen einer ersten nicht verfügbaren Verbindung verwendet wird, Löschen der ersten nicht verfügbaren Verbindung aus der aktiven FlexE-Verbindungsgruppe und Hinzufügen der ersten Schutzverbindung zur aktiven FlexE-Verbindungsgruppe; und
wobei jede Schutzverbindung in der Standby-FlexE-Verbindungsgruppe verwendet werden kann, um Schutzumschaltung für jede Verbindung in jeder aktiven FlexE-Verbindungsgruppe bereitzustellen;
wobei eine nicht verfügbarer Verbindung zu einem Standbyverbindung wird, nachdem sie durch eine Schutzverbindung ersetzt wurde und nachdem die nicht verfügbare Verbindung wieder verfügbar wurde; und
wobei die erste Netzwerkvorrichtung (11) beim Feststellen, dass es mindestens eine nicht verfügbare Verbindung in der aktiven FlexE-Verbindungsgruppe gibt, die m StandbyVerbindungen als Schutzverbindungen aus der Standby-FlexE-Verbindungsgruppe basierend auf den folgenden Bedingungen auswählt: es gibt keine vorkonfigurierte Standbyverbindung oder auswählbare Standbyverbindung in der aktiven FlexE-Verbindungsgruppe, und es gibt einen auswählbaren Standbyverbindungen in der Standby-FlexE-Verbindungsgruppe.

## Revendications

1. Procédé de commutation de protection, dans lequel le procédé comprend :
la détermination, au moyen d'un premier dispositif réseau (11), du fait qu'il existe au moins une liaison indisponible dans un groupe de liaisons Flexible Ethernet, FlexE, actif, et la sélection de m liaisons de secours parmi des liaisons de secours préconfigurées en tant que liaisons de protection, dans lequel le groupe de liaisons FlexE actif comprend une pluralité de liaisons qui sont logiquement liées, et m est un nombre entier positif inférieur ou égal à une quantité de liaisons indisponibles dans le groupe de liaisons FlexE actif ;
l'envoi, par le premier dispositif réseau (11), d'une notification de commutation de protection à un second dispositif réseau (12), et le remplacement de m liaisons indisponibles dans l'au moins une liaison indisponible par les m liaisons de protection, dans lequel la notification de commutation de protection est utilisée pour ordonner au second dispositif réseau (12) de remplacer les m liaisons indisponibles par les m liaisons de protection, et les m liaisons de protection sont en correspondance biunivoque avec les m liaisons indisponibles ;
la réception, par le premier dispositif réseau (11), d'une réponse de commutation de protection envoyée par le second dispositif réseau (12) ;
dans lequel le remplacement, par le premier dispositif réseau, de m liaisons indisponibles dans l'au moins un lien indisponible par les m liaisons de protection comprend :
si une première liaison de protection dans les m liaisons de protection appartient à un groupe de liaisons FlexE de secours et est utilisée pour remplacer une première liaison indisponible, la suppression, par le premier dispositif réseau (11), de la première liaison indisponible du groupe de liaisons FlexE actif, et l'ajout de la première liaison de protection au groupe de liaisons FlexE actif ;
dans lequel une quelconque liaison de protection dans le groupe de liaisons FlexE de secours peut être utilisée pour fournir une commutation de protection pour une quelconque liaison dans un quelconque groupe de liaisons FlexE actif ;
dans lequel une liaison indisponible devient une liaison de secours après avoir été remplacée par une liaison de protection et après que la liaison indisponible est restaurée à l'état disponible ; et
dans lequel, lorsqu'il est déterminé qu'il existe au moins une liaison indisponible dans le groupe de liaisons FlexE actif, le premier dispositif réseau (11) sélectionne les m liaisons de secours en tant que liaisons de protection à partir du groupe de liaisons FlexE de secours sur la base des conditions suivantes : il n'existe pas de liaison de secours préconfigurée ou de liaison de secours sélectionnable dans le groupe de liaisons FlexE actif, et il existe une liaison de secours sélectionnable dans le groupe de liaisons FlexE de secours.

2. Procédé selon la revendication 1, dans lequel la notification de commutation de protection est une trame d'informations FlexE, un champ cible de la trame d'informations FlexE transporte des informations de commutation de protection, et les informations de commutation de protection sont utilisées pour ordonner au second dispositif réseau (12) de remplacer les m liaisons indisponibles par les m liaisons de protection.

3. Procédé de commutation de protection, dans lequel le procédé comprend :
la réception, par un second dispositif réseau (12), d'une notification de commutation de protection envoyée par un premier dispositif réseau (11), dans lequel la notification de commutation de protection est envoyée par le premier dispositif réseau (11) après que le premier dispositif réseau (11) sélectionne m liaisons de secours à partir de liaisons de secours préconfigurées en tant que liaisons de protection lorsque le premier dispositif réseau (11) détermine qu'il existe au moins une liaison indisponible dans un groupe de liaisons Flexible Ethernet, FlexE, actif, dans lequel le groupe de liaisons FlexE actif comprend une pluralité de liaisons qui sont logiquement liées, la notification de commutation de protection est utilisée pour ordonner au second dispositif réseau (12) de remplacer m liaisons indisponibles dans l'au moins une liaison indisponible par les m liaisons de protection, les m liaisons de protection sont en correspondance biunivoque avec les m liaisons indisponibles, et m est un nombre entier positif inférieur ou égal à une quantité de liaisons indisponibles dans le groupe de liaisons FlexE actif ;
le remplacement, par le second dispositif réseau (12), sur la base de la notification de commutation de protection, des m liaisons indisponibles par les m liaisons de protection ;
l'envoi, par le second dispositif réseau (12), d'une réponse de commutation de protection au premier dispositif réseau (11) ;
dans lequel le remplacement, par le second dispositif réseau, des m liaisons indisponibles par les m liaisons de protection comprend :
si une première liaison de protection dans les m liaisons de protection appartient à un groupe de liaisons FlexE de secours et est utilisée pour remplacer une première liaison indisponible, la suppression, par le second dispositif réseau (12), de la première liaison indisponible du groupe de liaisons FlexE actif, et l'ajout de la première liaison de protection au groupe de liaisons FlexE actif ;
dans lequel une quelconque liaison de protection dans le groupe de liaisons FlexE de secours peut être utilisée pour fournir une commutation de protection pour une quelconque liaison dans un quelconque groupe de liaisons FlexE actif ;
dans lequel une liaison indisponible devient une liaison de secours après avoir été remplacée par une liaison de protection et après que la liaison indisponible est restaurée à l'état disponible ; et
dans lequel, lorsqu'il est déterminé qu'il existe au moins une liaison indisponible dans le groupe de liaisons FlexE actif, le premier dispositif réseau (11) sélectionne les m liaisons de secours en tant que liaisons de protection à partir du groupe de liaisons FlexE de secours sur la base des conditions suivantes : il n'existe pas de liaison de secours préconfigurée ou de liaison de secours sélectionnable dans le groupe de liaisons FlexE actif, et il existe une liaison de secours sélectionnable dans le groupe de liaisons FlexE de secours.

4. Dispositif réseau (1200), dans lequel le dispositif réseau (1200) est un premier dispositif réseau (11) et le dispositif réseau (1200) comprend une unité de traitement (1202) et une unité de communication (1203), dans lequel
l'unité de traitement (1202) est configurée pour déterminer qu'il existe au moins une liaison indisponible dans un groupe de liaisons Flexible Ethernet, FlexE, actif et sélectionner m liaisons de secours parmi des liaisons de secours préconfigurées en tant que liaisons de protection, dans lequel le groupe de liaisons FlexE actif comprend une pluralité de liaisons qui sont logiquement liées, et m est un nombre entier positif inférieur ou égal à une quantité de liaisons indisponibles dans le groupe de liaisons FlexE actif ; et
l'unité de communication (1203) est configurée pour envoyer une notification de commutation de protection à un second dispositif réseau (12), la notification de commutation de protection est utilisée pour ordonner au second dispositif réseau (12) de remplacer m liaisons indisponibles dans l'au moins une liaison indisponible avec les m liaisons de protection, et les m liaisons de protection sont en correspondance biunivoque avec les m liaisons indisponibles, dans lequel
l'unité de traitement (1202) est en outre configurée pour remplacer les m liaisons indisponibles par les m liaisons de protection,
l'unité de communication (1203) est en outre configurée pour recevoir une réponse de commutation de protection envoyée par le second dispositif réseau (12) ;
dans lequel l'unité de traitement est configurée pour :
si une première liaison de protection dans les m liaisons de protection appartient à un groupe de liaisons FlexE de secours et est utilisée pour remplacer une première liaison indisponible, supprimer la première liaison indisponible du groupe de liaisons FlexE actif, et ajouter la première liaison de protection au groupe de liaisons FlexE actif ;
dans lequel une quelconque liaison de protection dans le groupe de liaisons FlexE de secours peut être utilisée pour fournir une commutation de protection pour une quelconque liaison dans un quelconque groupe de liaisons FlexE actif ;
dans lequel une liaison indisponible devient une liaison de secours après avoir été remplacée par une liaison de protection et après que la liaison indisponible est restaurée à l'état disponible ; et
dans lequel, lorsqu'il est déterminé qu'il existe au moins une liaison indisponible dans le groupe de liaisons FlexE actif, le premier dispositif réseau (11) sélectionne les m liaisons de secours en tant que liaisons de protection à partir du groupe de liaisons FlexE de secours sur la base des conditions suivantes : il n'existe pas de liaison de secours préconfigurée ou de liaison de secours sélectionnable dans le groupe de liaisons FlexE actif, et il existe une liaison de secours sélectionnable dans le groupe de liaisons FlexE de secours.

5. Dispositif réseau (1200) selon la revendication 4, dans lequel la notification de commutation de protection est une trame d'informations FlexE, un champ cible de la trame d'informations FlexE transporte des informations de commutation de protection, et les informations de commutation de protection sont utilisées pour ordonner au second dispositif réseau (12) de remplacer les m liaisons indisponibles par les m liaisons de protection.

6. Dispositif réseau (1200), dans lequel le dispositif réseau (1200) est un second dispositif réseau (12) et le dispositif réseau (1200) comprend une unité de traitement (1202) et une unité de communication (1203), dans lequel
l'unité de communication (1203) est configurée pour recevoir une notification de commutation de protection envoyée par un premier dispositif réseau (11), dans lequel la notification de commutation de protection est envoyée par le premier dispositif réseau (11) après que le premier dispositif réseau (11) sélectionne m liaisons de secours à partir de liaisons de secours préconfigurées en tant que liaisons de protection lorsque le premier dispositif réseau (11) détermine qu'il existe au moins une liaison indisponible dans un groupe de liaisons Flexible Ethernet, FlexE, actif, dans lequel le groupe de liaisons FlexE actif comprend une pluralité de liaisons qui sont logiquement liées, la notification de commutation de protection est utilisée pour ordonner au second dispositif réseau (12) de remplacer m liaisons indisponibles dans l'au moins une liaison indisponible par les m liaisons de protection, les m liaisons de protection sont en correspondance biunivoque avec les m liaisons indisponibles, et m est un nombre entier positif inférieur ou égal à une quantité de liaisons indisponibles dans le groupe de liaisons FlexE actif ;
l'unité de traitement (1202) est configurée pour remplacer, sur la base de la notification de commutation de protection, les m liaisons indisponibles par les m liaisons de protection, dans lequel
l'unité de communication (1203) est en outre configurée pour envoyer une réponse de commutation de protection au premier dispositif réseau (11) ;
dans lequel l'unité de traitement est configurée pour :
si une première liaison de protection dans les m liaisons de protection appartient à un groupe de liaisons FlexE de secours et est utilisée pour remplacer une première liaison indisponible, supprimer la première liaison indisponible du groupe de liaisons FlexE actif, et ajouter la première liaison de protection au groupe de liaisons FlexE actif ; et
dans lequel une quelconque liaison de protection dans le groupe de liaisons FlexE de secours peut être utilisée pour fournir une commutation de protection pour une quelconque liaison dans un quelconque groupe de liaisons FlexE actif ;
dans lequel une liaison indisponible devient une liaison de secours après avoir été remplacée par une liaison de protection et après que la liaison indisponible est restaurée à l'état disponible ; et
dans lequel, lorsqu'il est déterminé qu'il existe au moins une liaison indisponible dans le groupe de liaisons FlexE actif, le premier dispositif réseau (11) sélectionne les m liaisons de secours en tant que liaisons de protection à partir du groupe de liaisons FlexE de secours sur la base des conditions suivantes : il n'existe pas de liaison de secours préconfigurée ou de liaison de secours sélectionnable dans le groupe de liaisons FlexE actif, et il existe une liaison de secours sélectionnable dans le groupe de liaisons FlexE de secours.
